(19) **Europäisches Patentamt**

**European Patent Office**

**Office européen des brevets**

(11) **EP 0 858 051 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.$^7$: **G06T 5/00**

(21) Anmeldenummer: **98102285.8**

(22) Anmeldetag: **10.02.1998**

(54) **Verfahren zum Segmentieren eines digitalen Bildes**

Digital image segmentation method

Méthode de segmentation d'image digitale

(84) Benannte Vertragsstaaten:
**DE GB**

(30) Priorität: **10.02.1997 DE 19705017**

(43) Veröffentlichungstag der Anmeldung:
**12.08.1998 Patentblatt 1998/33**

(73) Patentinhaber: **Definiens AG.**
**80331 München (DE)**

(72) Erfinder:
- **Baatz, Martin, Dr.**
  **80799 München (DE)**
- **Binnig, Gerd, Dr.**
  **8832 Wollerau (CH)**
- **Eschenbacher, Peter, Dr.**
  **91077 Neunkirchen (DE)**
- **Melchinger, Andreas, Dr.**
  **89173 Lonse (DE)**
- **Sögtrop, Michael**
  **85586 Poing (DE)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
- **BEAULIEU J -M ET AL: "Hierarchy in picture segmentation: a stepwise optimization approach" IEEE TRANSACTIONS ON PATTERN ANALYSIS AND MACHINE INTELLIGENCE, FEB. 1989, USA, Bd. 11, Nr. 2, Seiten 150-163, XP002153011 ISSN: 0162-8828**
- **TREMEAU A ET AL: "A LOCAL SPATIOCOLOR ANALYSIS APPLIED TO PATTERN SEGMENTATION" PROCEEDINGS OF THE INTERNATIONAL CONFERENCE ON IMAGE PROCESSING (ICIP),US,LOS ALAMITOS, IEEE COMP. SOC. PRESS, Bd. CONF. 1, 13. November 1994 (1994-11-13), Seiten 1011-1015, XP000522948 ISBN: 0-8186-6952-7**
- **MONTANVERT A ET AL: "HIERARCHICAL IMAGE ANALYSIS USING IRREGULAR TESSELLATIONS" IEEE TRANSACTIONS ON PATTERN ANALYSIS AND MACHINE INTELLIGENCE,US,IEEE INC. NEW YORK, Bd. 13, Nr. 4, 1. April 1991 (1991-04-01), Seiten 307-316, XP000214962 ISSN: 0162-8828**
- **STRASTERS K C ET AL: "THREE-DIMENSIONAL IMAGE SEGMENTATION USING A SPLIT, MERGE AND GROUP APPROACH" PATTERN RECOGNITION LETTERS,NL,NORTH-HOLLAND PUBL. AMSTERDAM, Bd. 12, Nr. 5, 1. Mai 1991 (1991-05-01), Seiten 307-325, XP000214969 ISSN: 0167-8655**

**Beschreibung**

Die vorliegende Erfindung betrifft ein Verfahren zum Segmentieren eines aus einer Vielzahl einzelner Bildelemente bestehenden Bildes gemäß dem Oberbegriff des Anspruchs 1, mit dem ein beliebig dimensionales Bild in beliebiger Auflösung, das heißt, einer beliebigen Anzahl von Bildelementen pro Segment, und/oder gleichzeitig in mehreren unterschiedlichen Auflösungen segmentiert werden kann.

Es ist anzumerken, daß der Ausdruck "digitales Bild", wie er hierin verwendet wird, als beliebig dimensionaler digitaler Datensatz, der zu segmentieren ist, und der Ausdruck "Bildelement" als kleinstes einzelnes in diesem Datensatz enthaltenes Element, wie zum Beispiel ein Pixel oder Voxel, aufzufassen ist. Weiterhin ist anzumerken, daß der Ausdruck "Bildobjekt", wie er hierin verwendet wird, als Bildelement oder Bildsegment zusammenfassend aufzufassen ist und daß ein Bildsegment ebenso ein einziges Bildelement enthalten kann.

In den meisten Anwendungsbereichen der digitalen Bildverarbeitung und Mustererkennung ist es notwendig, zusammengehörige Strukturen in einem Bild, das aus einer Vielzahl einzelner Bildelemente besteht, zu erkennen und zu klassifizieren. Daher besteht ein wichtiger Schritt in der Zusammenfassung von zusammengehörigen, benachbarten Bildelementen zu zusammenhängenden Bildsegmenten. Dieses Verfahren wird als Segmentieren bezeichnet. Die derart gefundenen Bildsegmente bieten über Form- und Textureigenschaften wesentlich mehr Information für eine anschließende Klassifikation als einzelne Bildelemente, wobei diese Information stark von der Qualität der Segmentierung abhängt.

Die wesentlichen Kriterien für das Segmentieren von Bildelementen sind Nachbarschaftlichkeit und sogenannte Homogenitätskriterien, die festlegen, ob ein Segment nach Zusammenfassung von Bildelementen als homogen betrachtet wird oder nicht. Ein Homogenitätskriterium legt fest, ob Zusammenfassung erfolgt oder nicht. In einem Homogenitätskriterium können zum Beispiel bestimmte Textureigenschaften oder eine Homogenität von Merkmalen definiert sein.

Eine spezielle Schwierigkeit beim Segmentieren eines Bildes entsteht durch die Textur von Bildbereichen, wie sie in sehr vielen Bildern in unterschiedlichster Ausprägung auftritt. Charakteristischerweise sind fast alle Objekttypen mehr oder minder texturiert. Eine derartige Textur ist neben anderen Eigenschaften, wie zum Beispiel Körnigkeit oder Strich, wesentlich gekennzeichnet durch eine mehr oder weniger starke Merkmalsverteilung, wie zum Beispiel eine Grauwert- oder Farbverteilung.

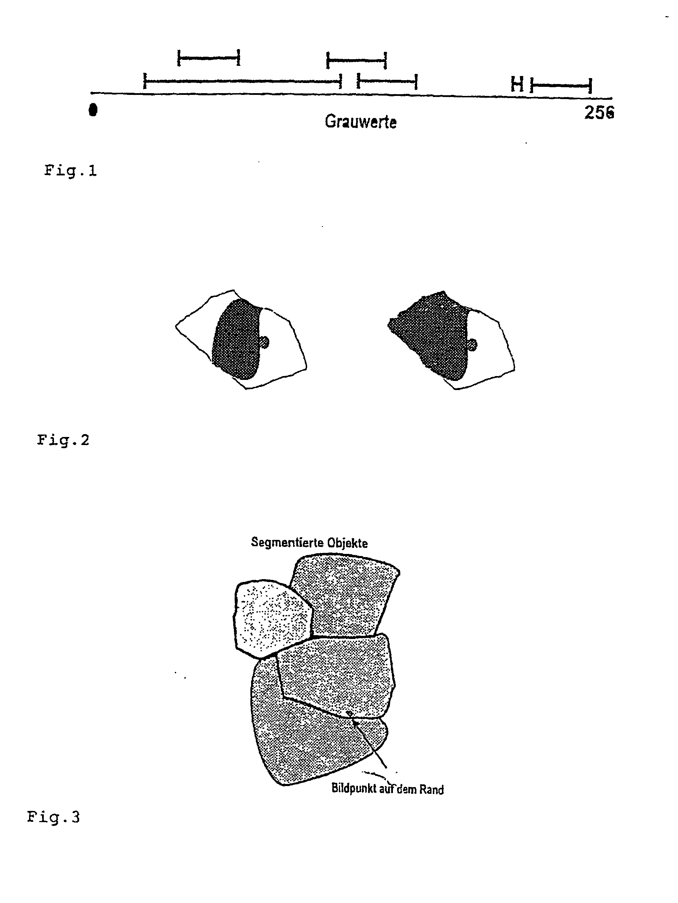

Derartige Verteilungen von Merkmalswerten können für unterschiedliche Objekte größer oder kleiner sein und sie können sich auch überlappen; beispielsweise ist in Fig. 1 ein Fall dargestellt, bei dem insgesamt sechs Objekte gezeigt sind, die jeweils einen unterschiedlich großen Grauwertebereich (dessen Werteskala zwischen 0 und 256 liegt) aufweisen, wobei sich der jeweilige Grauwertebereich der oben dargestellten Objekte mit dem der darunter dargestellten Objekte ganz oder teilweise überlappt.

Dies macht beim Segmentieren erhebliche Schwierigkeiten, da auf der einen Seite texturhafte Objekte, die zum Teil sehr unterschiedliche Merkmalswerte aufweisen, vollständig segmentiert werden sollen, während auf der anderen Seite das Segmentieren im allgemeinen aufgrund von Merkmalsähnlichkeiten erfolgt. Sind die Merkmalsunterschiede innerhalb eines Objekts zu groß, wird das Segmentieren aufgrund von Merkmalsähnlichkeit problematisch. Gleichzeitig ist es im allgemeinen schwierig, zwei benachbarte dbjekte, deren Merkmalsverteilungen sich überlappen, voneinander zu trennen.

Bei vielen Segmentierverfahren im Stand der Technik wird die Ähnlichkeit bzw. Zugehörigkeit zwischen Bildelementen und Bildsegmenten zum Beispiel anhand von sogenannten ein- oder mehrdimensionalen Schwellwertverfahren bestimmt, bei denen der Merkmalsraum, der durch die Merkmale der Bildelemente aufgespannt wird, in Teilbereiche eingeteilt wird. Das Homogenitätskriterium ist bei diesen bekannten Verfahren dann erfüllt, wenn die Bildelemente im gleichen Teilbereich liegen. So können zum Beispiel die 256 Graustufen, in denen ein digitalisiertes Bild häufig vorliegt, in 16 Bereiche mit jeweils 16 Grauwerten eingeteilt werden. Liegen zwei benachbarte Bildelemente im gleichen Grauwertebereich, so werden sie als ähnlich bewertet und daher segmentiert. Dies löst die oben beschriebenen Schwierigkeiten aber oft nur sehr unzureichend: werden bestimmte Objekte durch die Einteilung der Bereiche gut beschrieben, so kann diese Einteilung für andere Objekte völlig fehlschlagen.

Andere Verfahren versuchen Segmente aufgrund von bestimmten festgelegten Texturmerkmalen zusammenzufassen (texturbasiertes Segmentieren). Für spezifische Texturen funktioniert das auch in bestimmten Bildbereichen mehr oder minder gut, in anderen Bildbereichen jedoch oft schlechter. Diese Verfahren setzen gleichzeitig ein Vorwissen über das Bild und seine Texturen voraus und weiterhin sind sie auch nicht beliebig auflösend.

Segmentierverfahren, die mit Wassserscheidentransformation arbeiten, verwenden als Basis für das Segmentieren eine Darstellung der Farbgradienten im Bild, beginnen in den homogensten Bildbereichen zu segmentieren und vergrößern die Segmente sukzessive bzw. nach und nach in heterogenere Bildbereiche. Damit sind homogene Bildbereiche gut zu segmentieren, einheitlich heterogene Bildbereiche jedoch schwieriger; das gleichzeitige Segmentieren von homogenen und heterogenen, bzw. unterschiedlich heterogenen Bildbereichen ist nur sehr schwierig durchführbar. Darüber hinaus verzichtet das Verfahren auf die ursprüngliche Farbinformation.

Die Verfahren, bei denen eine Pixelklassifikation durchgeführt wird, arbeiten nach dem Prinzip, daß durch Vorwissen bekannte Intervalle oder Verteilungen im Merkmalsraum festgelegt werden, die für bestimmte Objektklassen charakteristisch sind. In diesem Fall werden die untersuchten Bildelemente jeweils derjenigen Klasse zugeordnet, zu der sie aufgrund ihres Vektors im Merkmalsraum die größte Zughörigkeitswahrscheinlichkeit aufweisen. Das Homogenitätskriterium ist in diesem Fall als Zugehörigkeit zur gleichen Klasse definiert. Abgesehen von der Tatsache, daß über einzelne Bildelemente eine viel geringere Information für die Klassifikation zur Verfügung steht als über Bildsegmente, entsteht bei der Verarbeitung von Luft- und Satellitenbildern dadurch eine besondere Schwierigkeit, daß die Verteilung der Merkmale für bestimmte Objekttypen sehr stark vom Wetter, von der Tages- und Jahreszeit und von den Lichtverhältnissen zum Zeitpunkt der Bildaufnahme abhängt. Demgemäß ist es sehr schwierig, typische Verteilungen für bestimmte Objektklassen im Merkmalsraum geeignet vorab zu definieren.

Aus Beaulieu J.-M. et al.: "HIERARCHY IN PICTURE SEGMENTATION: A STEPWISE ANALYSIS OPTIMIZATION APPROACH", IEEE Transactions on Pattern Analysis and Machine Intelligence, Februar 1989, USA, Bd. 11, Nr. 2, Seiten 150 bis 163, XP002153011, ISSN: 0162-8828 ist ein Verfahren zum Segmentieren eines digitalen Bildes bekannt, bei dem das Homogenitätskriterium derart festgelegt wird, das bei einer Zusammenfassung von zwei Bildobjekten der Unterschied der Mittelwerte kleiner als eine vorgegebene Toleranz sein muß.

Aus Montavert A. et al.: "HIERARCHICAL IMAGE ANALYSIS USING IRREGULAR TESSELLATIONS", IEEE Transactions on Pattern Analysis and Machine Intelligence, US, IEEE Inc., New York, Bd. 13, Nr. 4, 1. April 1991, Seiten 307 bis 316, XP000214962, ISSN: 0162-8828 ist ein Verfahren zum Segmentieren eines digitalen Bildes bekannt, bei dem Bildobjekte in stochastischer oder pseudo-stochastischer Reihenfolge bearbeitet werden und eine Iteration solange wiederholt wird, bis eine stabile oder annähernd stabile Segmentbildung erzielt wird.

Aus Tremeau A. et al.: "A LOCAL SPATIOCOLOR ANALYSIS APPLIED TO PATTERN SEGMENTATION", Proceedings of the International Conference on Image Processing (ICIP), US, Los Alamitos, IEEE Comp. Soc. Press, Bd. Conf. 1, 13. November 1994, Seiten 1011 bis 1015, XP000522948, ISBN: 0-8186-6952-7 ist ein Verfahren zum Segmentieren eines digitalen Bildes gemäß dem Oberbegriff des Anspruchs 1 bekannt.

Die Aufgabe der vorliegenden Erfindung besteht demgemäß darin, ein Segmentierverfahren der im Oberbegriff des Anspruchs 1 angegebenen Art derart weiterzubilden, daß auch dann eine hervorragende Segmentierung bzw. Objekterkennung gewährleistet ist, wenn die betreffenden Objekte überlappende Merkmalsbereiche aufweisen, oder durch derartige Merkmalswerte geprägt sind, die bei unterschiedlichen Be-dingungen stark schwanken.

Ein Verfahren soll geschaffen werden, das den nachfolgenden mehreren Spezifikationen genügt: hohe Flexibilität; Segmentierung in beliebiger Auflösung und von ausgezeichneter Qualität; gleichzeitiges Darstellen der Segmentierung in unterschiedlicher Auflösung in Form einer hierarchischen Objektstruktur; Bearbeiten von stark texturierten Bildern; Trennen stark texturierter Bildbereiche von homogeneren Bildbereichen; Trennen von Bildbereichen, auch wenn diese sich überlappende Merkmalsbereiche aufweisen; Bearbeiten von beliebig dimensionalen Bildern, die zum Beispiel von ein-, zwei- oder dreidimensional bildgebenden oder anderen Verfahren erzeugt werden; und objektbezogenes Zulassen spezieller Homogenitätskriterien, so daß zum Beispiel auch Linienstrukturen oder Bildbereiche mit konstantem Farbverlauf segmentiert werden.

Diese Aufgabe wird erfindungsgemäß mit den im Anspruch 1 angegebenen Verfahrensschritten gelöst.

Vorteilhafte Weiterbildungen der Erfindung sind Gegenstand der Unteransprüche.

Mit der Erfindung wird ein Verfahren zum Segmentieren in der digitalen Bildverarbeitung geschaffen, das bei geringem Vorwissen über das jeweilige digitale Bild oder den Datensatz und die darin enthaltenen Muster das Bild oder den Datensatz abhängig von der vorgegebenen Toleranz in einer beliebigen Auflösung und gleichzeitig sehr guter Qualität segmentiert. Ausgehend von möglichst vielen über das Bild verstreuten Keimzellen werden kleine Segmente zu größeren zusammengefaßt, wobei mit Segmenten begonnen wird, die nur ein Bildelement enthalten. Das Homogenitätskriterium ist dabei derart definiert, daß der Unterschied eines bestimmten Merkmals innerhalb einer vorab zu bestimmenden Toleranz liegen muß.

Dieses Kriterium kann dabei unter anderem gegenseitig oder global bestpassend angewendet werden, das heißt, daß es bei einer Zusammenfassung von zwei Bildobjekten zu keinem der beiden Bildobjekte ein anderes Nachbarobjekt gibt, zu dem das jeweilige Bildobjekt einen geringeren Merkmalsunterschied aufweist.

Ähnlich wie Verfahren der Wasserscheidentransformation wird das Segmentieren in den homogensten Bildbereichen begonnen, werden nachfolgend aber auch heterogene Bildbereiche segmentiert und diese gegenseitig und von homogenen abgesetzt.

Darüber hinaus besteht die Möglichkeit, aus gefundenen Segmenten eine hierarchische Bildobjektstuktur aufzubauen, in der gröber segmentierte Bildobjekte feiner segmentierte Bildobjekte als Unterobjekte enthalten, und damit die Möglichkeit, die Bildinformation in unterschiedlicher Auflösung gleichzeitig darzustellen. Zusätzlich zu den Form- und Textureigenschaften der Segmente stehen in einer derartigen Struktur auch Kontextbeziehungen (Oberobjekte, Unterobjekte, Nachbarschaft) als weitere Information für eine Klassifikation zur Verfügung. Dieser Aufbau einer hierarchischen Objektstruktur kann durch Vorgabe von Toleranzen für die jeweiligen Bildobjekt-Ebenen gesteuert vorgenommen werden oder aber auch nach bestimmten Kriterien automatisch vorgenommen werden, so daß hierarchische Objektstrukturen unterschiedlicher Tiefe entstehen, die an denjenigen Stellen die Bildinformation in mehr Ebenen auflösen, an denen diese auch strukturierter ist.

Schließlich kann abhängig von Merkmalen oder von Klassifikation mit objektbezogen angepaßten Homogenitätskriterien segmentiert werden. Dies kann zum Beispiel für eine zusätzlich Liniensegmentierung verwendet werden, die neben den üblichen Segmenten linienhafte Strukturen in dem Bild oder in dem Datensatz findet.

Somit besteht die Möglichkeit der Verwendung als Basis für eine weitere Klassifikation, um die damit mögliche ünterscheidungsfähigkeit und die Klassifikationswahrscheinlichkeiten in vielen Anwendungsgebieten zu erhöhen.

Von anderen Segmentierverfahren, wie zum Beispiel Einoder Mehr-Schwellwert-Verfahren unterscheidet sich das Verfahren in Flexibilität (beliebige Auflösung) und Qualität. Eine besondere Stärke liegt in der Segmentierung von texturierten Bildern oder Datensätzen (zum Beispiel Radar- oder Röntgenbildern), die mit anderen Verfahren oft schwierig ist, in der gleichzeitigen Segmentierung von homogenen und heterogenen Bildbereichen, in der gleichzeitigen Darstellung mehrerer Auflösungsebenen in Form einer hierarchischen Objektstruktur, sowie in der gleichzeitigen Darstellung von bestimmten unterschiedlichen Bildstrukturen, wie zum Beispiel Flächen- und Liniensegmenten oder Bildbereichen mit keinem Farbverlauf und derartigen mit Farbverlauf.

Nachfolgend werden die wesentlichen Gesichtspunkte, die sich aus den nachfolgenden Ausführungen noch deutlich ergeben, kurz dargelegt:

- Homogenitätskriterien werden in Form einer vorzugebenden Toleranz definiert, innerhalb der sich Merkmalswerte der beiden betroffenen Bildobjekte unterscheiden.
- Es gibt einen grundlegenden Typ von Homogenitätskriterien mit dem der Unterschied zwischen Merkmalswerten der Bildobjekte festgestellt wird:
- Es wird der potentielle Zustand von zwei zusammengefaßten Bildobjekten nach der Fusion mit dem Zustand vor der Fusion verglichen. Demgemäß kann der Heterogenitätseintrag bei einer möglichen Zusammenfassung bestimmt und damit auf den Unterschied zwischen Merkmalen der betroffenen Bildobjekte rückgeschlossen werden. Zweckmäßige Merkmale, die verglichen werden können, sind gewichtete Standardabweichung, gewichteter Unterschied im Mittelwert oder gewichtete Varianz.
- Unter Verwendung von einfacher Passung (Zusammenfassung von nachbarschaftlichen Bildobjekten, wenn das Homogenitätskriterium erfüllt ist), Bestpassung (Zusammenfassung mit demjenigen Nachbarn, mit dem das Homogenitätskriterium am besten erfüllt ist), gegenseitiger Bestpassung (Zusammenfassung, wenn das Homogenitätskriterium für jedes der beteiligten nachbarschaftlichen Bildobjekte am besten erfüllt ist) oder globaler Bestpassung (Zusammenfassung derjenigen nachbarschaftlichen Bildobjekte, bei denen über den gesamten zu segmentierenden Bildbereich das Homogenitätskriterium am besten erfüllt ist) steigt die Qualität der Segmentierung in der Reihenfolge der vorhergehenden Aufzählung zunehmend an. Unter Verwendung von gegenseitiger oder globaler Bestpassung ist ein Segmentierverlauf gewährleistet, der zunächst in möglichst homogenen Bildbereichen beginnt, hin zu immer heterogeneren Segmenten fortschreitet, bis eine weitere Zusammenfassung an der Toleranzschwelle verhindert wird.
- Segmentveränderungen werden durch Segmentfusion, durch Aufnahme von Bildelementen oder Bildsegmenten einer nächst tieferen Bildobjekt-Ebene, durch Gründung neuer Bildsegmente als Oberobjekte, durch Abstoßung von Teil-Bildobjekten und durch Randkorrektur erreicht.
- Die Bearbeitung der Bildelemente und Segmente erfolgt auf eine derartige Weise, daß an möglichst vielen Stellen des zu segmentierenden Bildbereichs Keimzellen der Segmentierung entstehen, das heißt, in möglichst großem Abstand zu im gleichen Durchgang schon behandelten Stellen des Bildbereichs und/oder in stochastischer Reihenfolge.
- Der jeweilige Segmentierungszustand wird in mehrfachen Bearbeitungsdurchgängen solange überarbeitet, bis das Ergebnis konvergiert und trotz weiterer Bearbeitung stabil bleibt.
- Die Segmentierung führt zu einer hierarchischen Bildobjekt-Struktur, in der zumindest Bildelemente einmal zu Bildsegmenten zusammengefaßt werden; es können aber auch Bildsegmente auf mehrfache hierarchische Weise zu übergeordneten Bildsegmenten zusammengefaßt werden, so daß die Bildinformationen gleichzeitig in unterschiedlichen Auflösungen segmentiert vorliegt. Bildelemente und Bildsegmente werden gemeinsam als Bildobjekte bezeichnet. Der Einzug von neuen hierarchischen Ebenen kann definiert mit Vorgabe einer neuen Toleranz erfolgen, so daß, wenn, zum Beispiel eine die bereits gefundenen Segmente zusammenfassende neue Segmentebene einzuführen ist, sinnvollerweise mit einer gröberen Toleranz gearbeitet wird, während umgekehrt das Einziehen eine untergeordneten Ebene sinnvoller Weise mit feineren Toleranzen durchgeführt wird. Der Aufbau einer hierarchischen Objektstruktur kann aber auch automatisch nach bestimmten Kriterien, zum Beispiel durch Minimierung eines Komplexitätsmaßes der Objektstruktur, durchgeführt werden. Im letzteren Fall ist das Ergebnis eine Objektstruktur mit unterschiedlicher hierarchischer Tiefe, die bei Verwendung eines zweckmäßigen Komplexitätsmaßes zum Ausbilden von neuen Objektebenen die Bildinformation in ihren verschiedenen Auflösungen mit möglichst wenigen Bildobjekten in sinnvoller Weise abstrahiert.

- Die Verfahren Segmentfusion, Aufnahme, Gründung, Randkorrektur und Abstoßung von Segmentbestandteilen werden auf allen Ebenen der hierarchischen Objektstruktur auf gleiche (fraktale) Weise durchgeführt.
- Abhängig von Merkmalen oder Klassifikation kann mit objektbezogen angepaßten Homogenitätskriterien segmentiert werden. Dies kann zum Beispiel für eine zusätzliche Liniensegmentierung, die neben den üblichen Segmenten linienhafte Strukturen in dem Bild oder in dem Datensatz findet, oder eine Farbverlaufssegmentierung verwendet werden, die neben den üblichen Segmenten auch Farbverlaufsstrukturen im Bild zusammenfaßt.

Die wesentlichen Vorteile und Anwendungsgebiete des vorstehend erläuterten Verfahrens können wie folgt zusammengefaßt werden:

- Das Verfahren arbeitet weitgehend vorwissensfrei, das heißt, vorwissensfrei mit Ausnahme der Vorgabe einer Toleranz, und ist hinsichtlich der erwünschten Bildauflösung, das heißt, hinsichtlich der durchschnittlichen Anzahl von Bildelementen pro Segment, äußerst flexibel.
- das Verfahren kann weitgehend automatisiert durchgeführt werden, es erfordert keinen interaktiven Eingriff;
- Es bearbeitet Bilder oder bildähnliche Datensätzen beliebiger Dimensionalität.
- Es werden bei gegebener Auflösung differentialdiagnostisch sehr gute Segmentierungsergebnisse erzielt; gleiche Strukturen werden gemeinsam segmentiert und von anderen Strukturen getrennt;
- Es ist insbesondere auch dazu geeignet, texturierte Bildobjekte mit sich überlappenden Merkmalsbereichen zu finden und zu unterscheiden bzw. Bilder mit starkem Rauschen zu bearbeiten.
- Das Verfahren arbeitet im Gegensatz zu den vielen Verfahren im Stand der Technik nicht mit Pixelklassifikation und anschließender Segmentierung, vielmehr werden Bildelemente aufgrund von Homogenitätskriterien auf eine derartige Weise segmentiert, daß Bildstrukturen differentialdiagnostisch zweckmäßig zusammengefaßt werden. Bezüglich seiner Qualität ist es Segmentierverfahren, die über Schwellwert arbeiten, überlegen und es übertrifft Verfahren, die auf bestimmte Texturmerkmale hin segmentieren, an Flexibilität der erwünschten Auflösung und der Fähigkeit, unterschiedlichste Texturen gleichzeitig zu bearbeiten. Mit den derart erhaltenen Segmenten steht wesentlich mehr Information für eine anschließende Klassifikation zur Verfügung als über einzelne Bildelemente. Die auf diese Weise möglichen Klassifikationswahrscheinlichkeiten können daher deutlich erhöht werden.
- Eine hierarchische Segmentierung gibt die Strukturen in unterschiedlicher Auflösungsdichte oder Detailliertheit wieder. Diese Informationen liegen gleichzeitig vor; die Hierarchisierung kann automatisch vorgenommen werden und kommt dann ohne Vorgabe von Toleranzen aus.
- Mittels der vorzugebenden Toleranz kann das Verfahren sehr spezifisch an die Erfordernisse der Auflösung der Segmentierung angepaßt werden.
- Es wird eine weitestgehende Verdichtung und Verwendung der vorliegenden Information erreicht; dies ist mit Verfahren im Stand der Technik, die mit vorab definierten Teilbereichen oder Verteilungen im Merkmalsraum arbeiten und/oder nicht gleichzeitig in mehreren Ebenen auflösen, nicht möglich.
- Unterschiedlich texturierte Objekte werden auch dann klar abgegrenzt, wenn sie relativ breite und sich überlappende Merkmalsverteilungen aufweisen.

Die Erfindung wird nachstehend anhand eines Ausführungsbeispiels unter Bezugnahme auf die Zeichnung näher erläutert.

Es zeigt:

**Fig. 1**    sechs Objekte, die jeweils einen unterschiedlich großen Grauwertebereich (dessen Werteskala zwischen 0 und 256 liegt) aufweisen;

**Fig. 2**    die Fusion zweier Objekte; und

**Fig. 3**    eine Darstellung zur Erläuterung einer erfindungsgemäßen Randkorrektur.

Nachfolgend werden zunächst kurz einige wesentliche allgemeine Aspekte besprochen.

Unabhängig vom Typ des jeweiligen Homogenitätskriteriums läßt der Ansatz der globalen, lokalen oder einfachen Bestpassung, der von den homogensten Bildbereichen ausgeht, nur eine möglichst kleine Heterogenität in der Segmentierung zu. Dies ist für sich gesehen bereits ein wichtiger Grund für die Qualität einer Segmentierung.

Gleichzeitig ist die Reihenfolge, in der Segmente behandelt werden, von Bedeutung. Wenn ein digitales Bild mittels eines Filters behandelt wird, der das Bild systematisch Zeile für Zeile abläuft, jedes Bildelement genau einmal behandelt und dieses, wenn möglich, mit seiner Umgebung segmentiert, ist der derart erreichbare Zustand der Segmentierung eines digitalen Bildes mittels der in diesem Verfahren verwendeten Homogenitätskriterien aufgrund der Geschichtlichkeit des Verfahrens nicht optimal (siehe hierzu auch die Fig. 2). Durch das Abtasten bzw. Scannen des Bildes entsteht ein systematischer Fehler.

An je mehr Stellen die Segmentierung gleichzeitig beginnt und je mehr Keimzellen es für die Segmentierung gibt, desto differenzierter kann die Segmentierung arbeiten. Aus diesem Grund ist es von Vorteil, eine Reihenfolge in der Behandlung der Bildobjekte zu verwenden, die einen möglichst großen geographischen Abstand zu schon behandelten Bildobjekten sicherstellt. Ansonsten kann die Reihenfolge stochastisch sein. Es ist anzumerken, daß auch eine Reihenfolge der Behandlung der Bildobjekte prinzipiell von der Art des Homogenitätskriteriums unabhängig ist.

Nachstehend erfolgt die Beschreibung eines Ausführungsbeispiels der vorliegenden Erfindung.

In dem Verfahren gemäß dem Ausführungsbeispiel der vorliegenden Erfindung wird die Zusammengehörigkeit von Bildelementen und Bildsegmenten, das heißt, Bildobjekten, derart definiert, daß der in dem Homogenitätskriterium bestimmte Merkmalsunterschied von zwei zusammenzufassenden Bildobjekten innerhalb einer vorzubestimmenden Toleranz liegen muß.

Als Homogenitäts- und damit Qualitätsmaß einer Segmentierung kann die durchschnittliche gewichtete Standardabweichung $\bar{\sigma}$ der Farbmittelwerte der Bildobjekte einer bestimmten tieferen Bildobjekt-Ebene in einem Segment, das heißt,

$$\bar{\sigma} = \frac{\sum_i \sigma_i n_i}{\sum_i n_i} \qquad\qquad (1)$$

bzw. die durchschnittliche gewichtete Varianz var der Farbmittelwerte der Bildobjekte einer bestimmten tieferen Bildobjekt-Ebene, das heißt,

$$\overline{var} = \frac{\sum_i var_i n_i}{\sum_i n_i} \qquad\qquad (2)$$

herangezogen werden, wobei $var_i$ die Varianz, $\sigma_i$ die Standardabweichung und $n_i$ die Anzahl der im Bildobjekt i enthaltenen Bildobjekte der bestimmten tieferen Bildobjekt-Ebene sind. Ziel der Segmentierung ist es, bei gegebener Toleranz und damit Auflösung der Segmentierung (durchschnittliche Anzahl von Bildelementen pro Segment) ein möglichst geringes $\bar{\sigma}$ bzw. $\overline{var}$ zu erreichen. Dies bedeutet, daß die sich in Standardabweichung oder Varianz ausdrückende Heterogenität gemittelt über jedes Bildelement des gesamten Bildes möglichst klein ist.

Demgemäß entstehen Segmente im wesentlichen durch das Zusammenfassen von kleineren Segmenten zu größeren, wobei mit Bildsegmenten, die nur ein Bildelement enthalten, und an möglichst vielen Stellen im Bild begonnen wird. Der in dem Homogenitätskriterium definierte Merkmalsunterschied muß innerhalb einer vorab zu bestimmenden Toleranz liegen, wodurch die Auflösung der Segmentierung (durchschnittliche Anzahl von Bildelementen pro Segment) festgelegt wird. Ein Segment wird jeweils mit demjenigen Nachbarsegment zusammengefaßt, mit dem der im Homogenitätskriterium definierte Merkmalsunterschied (einfach, gegenseitig oder global) am geringsten ist. Diese Segmentierung über alle Bildelemente bzw. Bildsegmente wird iterativ bzw. wiederholt durchgeführt, wobei die Bildelemente bzw. Bildsegmente zusätzlich in einer stochastischen Reihenfolge bearbeitet werden, die einen möglichst großen geographischen Abstand zu bereits im gleichen Durchgang bearbeiteten Bildobjekten gewährleistet, so daß die Segmentierung mit möglichst vielen über das Bild verstreuten Segmentkeimzellen beginnt.

Mit diesen Maßnahmen wird erreicht, daß die Segmentierung auch dann zu sehr guten Ergebnissen führt, wenn sich ein Bild durch starke Textur auszeichnet und benachbarte Objekte sich überlappende Merkmalsbereiche aufweisen.

Die folgende Beschreibung des Verfahrens bezieht sich auf eine Segmentierung mit einfacher Objektstruktur, in der Bildelemente einmal zu Bildsegmenten zusammengefaßt werden.

Zu Beginn des Verfahrens wird das Homogenitätskriterium vorgegeben, das heißt, die Art, wie der Merkmalsunterschied definiert ist, zum Beispiel der Eintrag an gewichteter Standardabweichung, ob das Homogenitätskriterium passend oder einfach, gegenseitig oder global bestpassend anzuwenden ist (zum Beispiel gegenseitig bestpassend) und die Toleranz, mit der zu segmentieren ist. In einem nächsten Schritt erhält jedes der Bildelemente ein Bildsegment als Überobjekt, das genau dieses eine Bildelement enthält. Damit ist die neue Bildsegmentebene schon vollständig eingeführt. In mehreren wiederholten Durchgängen werden nun die derart gefundenen Segmente zu größeren Segmenten zusammengefaßt und randoptimiert, wobei in jedem Durchgang jedes der zu Beginn des Durchgangs vorhandenen Segmente genau einmal angelaufen wird. Die Reihenfolge ist dabei derart, daß ein möglichst großer Abstand zu bereits behandelten Segmenten eingehalten wird und/oder ansonsten zufällig. Damit ist der Aufbau der Segmentierung mit möglichst vielen Keimzellen gewährleistet. Für das Homogenitätskriterium wird der Merkmalsunterschied mit der vorgegeben Toleranz verglichen, wobei dieses Kriterium gegenseitig bestpassend angewendet wird. Zusammengefaßt wird nur, wenn jedes der beteiligten Bildsegmente für das andere das bestpassend ist.

Wahlweise kann auch jedes Segment randkorrigiert werden, wobei dies durchgangsweise abwechselnd mit der Fusion möglich ist: in einem Durchgang wird jedes der Segmente einmal bezüglich einer möglichen Fusion mit einem Nachbarsegment behandelt, in einem nächsten Durchgang jedes der Segmente einmal bezüglich einer möglichen Randkorrektur. Die Randkorrektur bedeutet, daß Rand-Bildelemente, die aufgrund des Homogenitätskriteriums besser zu einem Nachbarsegment passen, ausgetauscht werden. (Als Kriterium für die Randkorrektur könnten an dieser Stelle auch andere Kriterien, wie zum Beispiel die Zugehörigkeit eines Bildelements aufgrund der Häufigkeit im Histogramm oder aufgrund der Annahme einer Normalverteilung der Farbwerte im Segment, herangezogen werden). Dabei muß die Zusammenhängendheit der Segmente gewährleistet werden. Wenn an einer dünnen Stelle eines Segments aufgrund von Abstoßung oder Randkorrektur ein Bildelement ausgruppiert wird, besteht die Möglichkeit, daß das Segment nicht mehr direkt nachbarschaftlich zusammenhängend ist. In diesem Fall muß das Segment in seine zusammenhängenden Teile zerlegt werden. Die Randkorrektur kann wahlweise durchgeführt werden und führt zu einer besseren Qualität der Segmentierung, sie ist aber nicht zwingend notwendig. Die Durchgänge werden solange wiederholt, bis die Segmentierung in einen stabilen oder annähernd stabilen Zustand konvergiert.

Die folgende Beschreibung des Verfahrens bezieht sich auf die Segmentierung einer neuen Ebene in der hierarchischen Objektstruktur, die zwischen zwei bereits segmentierte Ebenen eingezogen wird.

Zu Beginn des Verfahrens wird wiederum das Homogenitätskriterium, das heißt, die Art, wie der Merkmalsunterschied definiert ist, zum Beispiel der Eintrag an gewichteter Varianz, ob das Homogenitätskriterium passend oder einfach, gegenseitig oder global bestpassend anzuwenden ist (zum Beispiel global bestpassend) und die Toleranz vorgegeben, mit der der Merkmalsunterschied zu vergleichen ist. Gleichzeitig muß bestimmt werden, auf welcher hierarchischen Stufe die Ebene in die Objektstruktur eingebaut werden soll. In einem ersten Schritt wird jedes der Bildsegmente der nächst tieferen Ebene aus seinem bisherigen Überobjekt entfernt, es wird dupliziert, erhält das duplizierte Bildsegment als Überobjekt und das duplizierte Segment wird als Unterobjekt wiederum in das bisherige Überobjekt eingefügt. Damit ist die neue Bildsegmentebene vollständig eingeführt.

Nun werden die derart erstellten Segmente zu größeren Segmenten zusammengefaßt, wobei immer global festgestellt wird, wie groß der im Homogenitätskriterium bestimmte Merkmalsunterschied bei jeder möglichen Zusammenfassung benachbarter Bildsegmente im gesamten Bildbereich ist, wobei wegen des Zwischenschiebens der neuen Ebene in die hierarchische Objektstruktur nur die Zusammenfassung von nachbarschaftlichen Bildobjekten möglich ist, die das gleiche Oberobjekt haben. Es wird jeweils diejenige Zusammenfassung mit dem global geringsten Merkmalsunterschied durchgeführt, wobei der Unterschied innerhalb der vorgegebenen Toleranz liegen muß.

Wahlweise kann auch jedes Segment randkorrigiert werden, wobei dies auch direkt nach jeder Fusion möglich ist. In diesem Fall sind die direkten Unterobjekte nicht Bildelemente, sondern Bildsegmente. Auch hier muß die Zusammenhängendheit der Segmente gewährleistet werden: wird ein Unterobjekt ausgruppiert, besteht die Möglichkeit, daß das Segment nicht mehr zusammenhängend ist und muß dann in seine zusammenhängenden Bestandteile zerlegt werden.

Das Verfahren wird solange fortgesetzt, bis es keine mögliche Zusammenfassung mehr gibt, die innerhalb der vorgegeben Toleranz liegt; die Segmentierung ist dann beendet.

Es ist grundsätzlich zu unterscheiden zwischen den beiden gleichermaßen beteiligten Methoden Segmentfusion und Randkorrektur. Beide Maßnahmen sind verantwortlich für die "Gestaltbildung" von Segmenten. Während jedoch die Segmentfusion Segmente dadurch erzeugt, daß sie kleinere Segmente auf der gleichen hierachischen Ebene verbindet, arbeitet die Randkorrektur auf der nächst tieferen Objektebene derart, daß sie Rand-Bildobjekte umlagert (im Falle einer Segmentierung mit mehreren hierarchischen Ebenen lagert die Randkorrektur gegebenenfalls auch Bildsegmente um). Die Randkorrektur führt dazu, daß Segmentgrenzen verschoben werden, und wiederholt angewendet können Bildsegmente dadurch stark verändert werden.

Die Tatsache, daß ein Segment durch Segmentfusion oder Randkorrektur verändert wird, führt dazu, daß es seine Eigenschaften und damit die Homogenitätskriterien ändert. Bildelemente oder Nachbarsegmente, die vorher nicht zu dem Segment gepaßt haben, können nun zu ihm passen. Umgekehrt können derartige Bildelemente, die einmal in das Segment aufgenommen worden sind, nun nicht mehr das (jetzt veränderte) Homogenitätskriterium mit dem Segment erfüllen. Auf diese Weise werden laufend Segmente fusioniert, Randpunkte und damit Segmentränder verschoben oder nicht mehr passende Bildobjekte aus einem Segment abgestoßen.

Die Abhängigkeit des jeweiligen Segmentierungszustands von dem konkreten Ablauf des Bildes bzw. der Bildobjekte (Historizität des Verfahrens) wird dabei bewußt in Kauf genommen. Die iterative, zyklische Optimierung des Bildes führt dazu, daß der Endzustand wiederholbar von gleicher Art ist, obwohl es in Details leichte Unterschiede geben kann. Dies ändert jedoch nichts an der hohen Qualität der Endergebnisse.

Werden die Bildobjekte in dem Bild auf die beschriebene Weise (und in stochastischer Reihenfolge) immer wieder neu behandelt, so wird die Segmentierung sukzessive bzw. nach und nach optimiert und konvergiert schließlich in einen stabilen Endzustand.

In vielen Fällen sind die Anforderungen an eine Segmentierung derart, daß gesamte Bilder zweckmäßig in ihre Bestandteile zu segmentieren sind, um dann eine Gesamtklassifikation vorzunehmen. Im Gegensatz dazu stehen Verfahren, mit denen einzelne bestimmte Objekttypen festzustellen sind.

Mit dem hierin beschriebenen Verfahren kann ein gesamtes digitales Bild oder ein digitaler Bildausschnitt auch bei wenig Vorwissen vollständig und sehr detailspezifisch segmentiert werden, wobei das Bild gleichzeitig auch stark texturiert oder verrauscht sein kann. Diese Segmentierung eignet sich dann sehr gut als Grundlage für eine semantische Klassifizierung des gesamten Bildes. Daher kann das Verfahren bei allen Arten von digitalen Bildern, unabhängig von den bilderzeugenden Verfahren und der Dimensionalität, angewendet werden.

Das Verfahren ist ausgezeichnet geeignet für die Bearbeitung von Satelliten- und Luftbildern, von allen Arten von medizinischen Bildern, und zwar von sowohl allen zweials auch dreidimensional bildgebenden Verfahren, aber auch für die einfache Bildobjektfindung. Eine besondere Tauglichkeit ergibt sich für die Segmentierung und Objektfindung von dreidimensionalen Bildern, wie zum Beispiel in der Medizintechnik, was sowohl für die Visualisierung als auch anschließende Klassifikation genutzt werden kann.

Auch ohne detailliertes Vorwissen über das Bild und seine Strukturen werden zusammengehörige Bildstrukturen segmentiert, während unterschiedliche Bildstrukturen, auch mit sich überlappenden Merkmalsverteilungen, voneinander getrennt werden. Die derart erreichte Segmentierung stellt ein sehr viel besseres Ergebnis für eine Klassifizierung als eine Pixelklassifikation dar, da in ganzen Segmenten sehr viel mehr Information enthalten ist als in einzelnen Bildelementen (Merkmalsverteilungen, Textur, Form, Größe usw.), jedoch auch als Ergebnisse anderer Segmentierverfahren, da die Qualität der gefundenen Segmentierung sehr gut ist, und mit Hilfe der Toleranz die Auflösung der Segmentierung sehr spezifisch den Erfordernissen angepaßt werden kann. Diese Information hilft, Klassifikationssicherheiten erheblich zu verbessern.

Wie bereits vorhergehend beschrieben worden ist, liegt ein zentrales Merkmal des Segmentierverfahrens in der Verwendung von zweckmäßigen Homogenitätskriterien.

Nachfolgend werden einige Beispiele für die verwendeten Homogenitätskriterien gegeben.

Hier gibt es verschiedene Möglichkeiten, die aber alle die spezifische Merkmalsverteilung oder andere Eigenschaften, wie die Größe der Segmente, Textur, Form oder Ausrichtung, in Betracnt zienen. Dabei ist jedoch gemeinsam, daß die Homogenitätskriterien den Merkmalsunterschied aus einem Vergleich des potentiellen Zustands von zwei zusammenzufassenden Bildobjekten nach der Fusion mit dem Zustand vor der Fusion bestimmen.

Nachstehend wird der Typ der Homogenitätskriterien beschrieben.

Diese Homogenitätskriterien sind derartige, die den Unterschied zwischen Merkmalen über den Heterogenitätseintrag in die Segmentierung bei der Zusammenfassung von zwei Bildobjekten durch den Vergleich der Segmentzustände nach und vor der Segmentierung bestimmen. Je geringer der Heterogenitätseintrag ist, desto geringer ist auch der Merkmalsunterschied der betroffenen Bildobjekte. Hierbei wird durch Gewichtung auch die Größe (Anzahl der Bildelemente) der betroffenen Bildbereiche berücksichtigt. Anstatt durch den direkten Merkmalsvergleich zwischen zwei Bildobjekten zu versuchen, möglichst homogene Segmente zusammenzufassen, wird mit dem zweiten Typ von Homogenitätskriterien der tatsächliche Zustand nach der Zusammenfassung mit dem vor der Zusammenfassung verglichen, und damit gewährleistet, daß möglichst wenig Heterogenität in die Segmentierung eingetragen wird.

Allgemein kann ein Homogenitätskriterium wie folgt angegeben werden:

$$\Delta h_{gew} = (n_1 + n_2)\, h_{neu} - (n_1 h_1 + n_2 h_2) + n_2 h_2) < \alpha \qquad (8)$$

wobei $\Delta h_{gew}$ die eingetragene Heterogenität, das heißt, die Differenz zwischen der mit der Größe der jeweiligen Segmente gewichteten Heterogenität der Segmente $h_1$ und $h_2$ nach der Fusion und vorher ist.

Zu diesem Typ gehört der Vergleich der gewichteten Standardabweichung:

$$\Delta \sigma_{gew} = n_1\, (\sigma_{neu} + \sigma_1) + n_2 (\sigma_{neu} - \sigma_2) < \alpha \qquad (9)$$

der Vergleich der gewichteten Mittelwertsänderung:

$$\Delta m_{gew} = n_1 |m_{neu} - m_1| + n_2 |m_{neu} - n_2| < \alpha \qquad (10)$$

und der Vergleich der gewichteten Varianz:

$$\Delta\mathrm{var}_{gew} = n_1(\mathrm{var}_{neu}\text{-}\mathrm{var}_1)+n_2\,(\mathrm{var}_{neu}\text{-}\mathrm{var}_2) < \alpha \qquad\qquad (11)$$

jeweils nach und vor der Zusammenfassung.

Ein anderes Homogenitätskriterium ist dazu geeignet, Bildbereiche mit kontinuierlichem Farbverlauf zu segmentieren. Hierzu wird zum Beispiel in einem zweidimensionalen Bild der durchschnittliche Abstand bzw. der gemittelte quadratische Abstand des durchschnittlichen Farbwerts der Teil-Bildobjekte, wie zum Beispiel der Bildelemente, zu einer Regressionsfläche dieser Farbmittelwerte im Ortsraum ermittelt. Dies ist dann das Maß für die Heterogenität h eines Segments und kann in Ungleichung (8) eingesetzt werden. Auf diese Weise werden Segmente mit einer möglichst kontinuierlichen bzw. keiner Änderung der Farbe über die Fläche erzeugt.

Je nach Bedarf kann die Farbverteilung im Ortsraum ebenso anstelle durch lineare Funktionen durch komplexe Funktionen angenähert werden.

Ein derartiges Homogenitätskriterium ist zum Beispiel dazu geeignet, zweidimensionale fotographische Wiedergaben von dreidimensionalen Objekten mit den dabei entstehenden Farbverläufen in zweckmäßige Bildobjekte zu segmentieren.

Die folgende Beschreibung des Verfahrens bezieht sich auf das Segmentieren von Linien.

Zu Beginn wird, wie vorhergehend beschrieben, flächenhaft segmentiert, wobei eines der Homogenitätskriterien vom zweiten Typ, der den Merkmalsunterschied zwischen zwei Bildobjekten über den Heterogenitätseintrag bei einer potentiellen Zusammenfassung untersucht, gegenseitig bestpassend verwendet wird. Zu jedem behandelten Bildobjekt wird das bestpassende Nachbar-Bildobjekt gesucht und diese werden nur dann zusammengefaßt, wenn die Bestpassung auch gegenseitig. Gleichzeitig wird ein Merkaml "Linienhaftigkeit" definiert, das zum Beispiel das Verhältnis von Länge zu Breite des Segments angibt. Jedes behandelte Bildsegment wird auf seine Linienhaftigkeit hin überprüft. Wenn die Linienhaftigkeit ein bestimmtes vorgegebenes Maß übersteigt, wird das Segment zusätzlich zu der vorhergehend beschriebenen Vorgehensweise als Liniensegment behandelt. das heißt, zusätzlich zu den direkt angrenzenden Nachbarn werden auch in Richtung der Linienenden bis zu einer vorbestimmten Entfernung und in einem vorbestimmten Winkelsektor nach passenden Bildobjekten gesucht, die die Linie ergänzen. In dem Maß, mit dem die Linie bei einer Zusammenfassung ergänzt wird, wird ein Faktor f ($0 \leq f \leq 1$) verkleinert, wobei der Merkmalsunterschied im Homogenitätskriterium mit diesem Faktor zusätzlich vermindert wird. Auf diese Weise ist die Passung zu die Linie ergänzenden Bildobjekten mit der Passung zu normalen Segmenten vergleichbar. Ein linienhaftes Segment kann je nach gegenseitiger Bestpassung sowohl derart mit nachbarschaftlichen Bildobjekten zusammengefaßt werden, daß die Linienhaftigkeit erhöht wird, als auch auf übliche Weise zusammengefaßt werden, wobei dabei die Linienhaftigkeit geringer wird.

Wird ein eine Linie ergänzendes Bildobjekt bestpassend gefunden, das nicht in direkt anschließender Nachbarschaft liegt, kann eine möglichst dünne Verbindungslinie gezogen werden, die die Zusammenhängendheit gewährleistet. Die dazu in Frage kommenden Bildobjekte müssen dann gegebenenfalls aus bereits bestehenden Segmenten ausgruppiert und anschließend dem Liniensegment zugeordnet werden.

Bei sehr dünnen Linienstrukturen kann es zusätzlich von Vorteil sein, für kleine und für linienhafte Segmente eine diagonale Nachbarschaft zuzulassen, wohingegen für alle anderen Segmente die Zusammmenhängendheit lediglich plan und nicht diagonal möglich ist. Dadurch können in der Segmentierung leichter Linien und Linien-Keimzellen entstehen. Überschreitet ein bisher kleines diagonal zusammenhängendes Segment eine kritische Größe oder unterschreitet ein bisher linienhaftes Segment durch Flächenfusion eine kritische Linienhaftigkeit, wird es in seine plan zusammmenhängenden Bestandteile zerlegt.

Nunmehr werden einige Beispiele für die Randkorrektur gegeben:

Es kann leicht der Fall sein, daß ein bestimmtes Rand-Unterobjekt (Bildelement oder Teilsegment) potentiell sowohl zu dem einen als auch einem anderen nachbarschaftlichen Segment gehören könnte. Für diesen Fall wird eine Randkorrektur durchgeführt. Es wird demgemäß überprüft, zu welchem der Segmente das Unterobjekt besser paßt.

Die einfachste Form ist, das gleiche Homogenitätskriterium wie in der Fusion zu verwenden. Jedes Rand-Unterobjekt eines Segments wird behandelt. Bildelemente werden behandelt wie Segmente mit einem Bildelement. Jedes der Rand-Unterobjekte wird zur Überprüfung seiner Zugehörigkeit aus dem bisherigen Segment ausgehängt bzw. entfernt, es wird anhand des Homogenitätskriteriums überprüft, ob es besser zu dem bisherigen oder zu einem anderen Segment paßt und es wird gegebenenfalls umgelagert.

Auf der niedrigsten Segment-Ebene kann auch ein eigenes Kriterium verwendet werden. Zu diesem Zweck wird für jedes der Segmente aus dem Merkmals-Mittelwert m und der Standardabweichung $\sigma$ eine Normalverteilung der Merkmale angenommen; man erhält dann folgende Gleichung (12):

$$\partial = \frac{1}{\sqrt{2\pi}\sigma} e^{\frac{1(x-m)2}{2\sigma 2}} \tag{12}$$

Aus dieser Normalverteilung ergibt sich der Erwartungswert $\partial$, mit dem das Merkmal x des Bildelements, dessen Zugehörigkeit festzustellen ist, in jeder der beiden Verteilungen angetroffen werden kann. Der Erwartungswert $\partial$ gibt dann direkt die Zugehörigkeit zu dem jeweiligen Segment an (Maximum-Likelihood-Kriterium). Ist die Zugehörigkeit zum Nachbarsegment größer als zu dem bisherigen, wird das Bildelement aus seinem bisherigen Segment gelöst und dem Nachbarsegment zugeordnet.

Ist ein Segment als Folge einer Auslagerung eines ünterobjekts, zum Beispiel bei Anwendung der Verfahren Abstoßung oder Randkorrektur, nicht mehr zusammenhängend, wird es in seine zusammenhängenden Bestandteile zerlegt.

Nachstehend werden Beispiele für die Behandlung der Homogenitätskriterien beim Segmentieren über mehrere Kanäle erläutert. Unter dem Begriff "Kanal" ist in diesem Zusammenhang zu verstehen, daß das betreffende Bild aus mehreren Einzelbildern (das heißt, Kanälen) mit unterschiedlichem Informationsgehalt besteht.

Steht ein digitales Bild in mehreren Kanälen zur Verfügung, stellt sich die Frage, wie eine Gesamtentscheidung aus der Überprüfung der Homogenitätskriterien, die bei jeder Entscheidung .jeweils über jeden Kanal anfallen, getroffen werden kann.

Einerseits kann ein Absolutkriterium herangezogen werden. Das Homogenitätskriterium muß in jedem Kanal erfüllt sein, sonst wird nicht fusioniert. Dadurch ist eine gute Informationsnutzung gewährleistet. Auch dann, wenn das Homogenitätskriterium in vielen Kanälen erfüllt ist, bedeutet dennoch der Unterschied in einem weiteren Kanal, daß die zugrunde liegenden Bildstrukturen unterschiedlich sind.

Andererseits können aber auch die Merkmalsunterschiede, die das Homogenitätkriterium in jedem Kanal ermittelt, aufsummiert oder gemittelt werden. Die Kanäle können dafür unterschiedlich gewichtet werden. Wird ein Qualitätskriterium (1) bei der Gesamtsegmentierung angewendet, das ebenfalls über die Kanäle mittelt, so führt eine Aufsummierung bzw. Mittelung bei der Anwendung der Homogenitätskriterien zu besseren Ergebnissen als ein Absolutkriterium.

Bei der Randkorrektur (siehe hierzu auch Fig. 3) ergibt sich über jeden Kanal eine Zugehörigkeitswahrscheinlichkeit des Bildelements zu einem Segment. Die Gesamt-Zugehörigkeitswahrscheinlichkeit ergibt sich aus dem geometrischen Mittel der einzelnen Zugehörigkeitswahrscheinlichkeiten in jedem Kanal. Dies bedeutet, daß bis zu einem gewissen Grad eine schlechtere Zugehörigkeitswahrscheinlichkeit in einem Kanal durch eine gute in einem anderen kompensiert werden kann. Wenn die Zugehörigkeit in einem Kanal allerdings besonders schlecht ist, drückt sich dies, trotz guter Zugehörigkeit in anderen Kanälen, deutlich in einer geometrischen Mittelung aus.

Nunmehr wird der Einzug einer neuen Objektebene in die hierarchische Objektstruktur beschrieben.

Dazu gibt es zwei prinzipielle Möglichkeiten.

Zum einen wird zu Beginn jedes Bildobjekt der nächst unteren Objektebene dupliziert. Bei Bildelementen wird ein Segment erzeugt, das genau dieses eine Bildelement als Unterobjekt enthält. Das jeweils neu erzeugte Segment wird als Oberobjekt des Objekts der nächst unteren Objektebene in die hierarchische Objektstruktur eingehängt bzw. eingefügt. Damit ist bereits eine neue Ebene erzeugt und diese kann nun auf die vorhergehend beschriebene Weise durch Vorgabe eines bestimmten Homogenitätskriteriums weiter bearbeitet, d.h., zusammengefaßt und/oder randoptimiert, werden.

Zum anderen wird zum Erzeugen einer neuen Objektebene nacheinander jedes der Bildobjekte der nächst tieferen Ebene abgelaufen, wobei die zuvor beschriebenen Kriterien für die Reihenfolge eingehalten werden. Wenn das Bildobjekt noch kein Oberobjekt auf der einzuziehenden Ebene hat, wird dieses durch Duplikation erzeugt und als Oberobjekt in die Objektstruktur eingehängt. Direkt anschließend wird versucht, für das neu ausgebildete Objekt ein nachbarschaftliches Bildobjekt zu finden, mit dem es aufgrund des Homogenitätskriteriums zusammengefaßt werden kann. Wenn dieses Bildobjekt ein Segment auf der gleichen Ebene ist, werden die beiden Segmente fusioniert. Wenn das Bildobjekt Bestandteil der nächst tieferen Ebene ist und es noch nicht Bestandteil eines Segments der neuen Ebene ist, wird dieses Bildobjekt durch Anlagerung als neues Unterobjekt mit dem Segment der neuen Ebene zusammengefaßt. Wenn die Bildobjekte der tieferen Ebene Bildelemente sind, werden sie behandelt, als wären sie ein Segment mit einem Bildelement. Auf diese Weise werden alle Bildobjekte der nächst tieferen Ebene behandelt, bis die neue Ebene vollständig über den gesamten Bildbereich erzeugt ist. Anschließend kann die neue Ebene auf die vorhergehend beschriebene Weise weiter bearbeitet, das heißt, zusammengefaßt und/oder randoptimiert, werden.

Wenn eine neue Ebene zwischen zwei schon bestehende Bildobjekt-Ebenen eingezogen wird, werden nur derartige Bildobjekte zusammengefaßt, die Bestandteil des gleichen Oberobjekts auf der oberen Ebene sind.

**EP 0 858 051 B1**

**Patentansprüche**

1. Verfahren zum Segmentieren eines aus einer Vielzahl von einzelnen Bildelementen bestehenden digitalen Bildes, bei dem zur digitalen Bildverarbeitung, Objekterkennung und/oder Mustererkennung aus Bildelementen und/oder Bildsegmenten bestehende Bildobjekte dadurch gebildet werden, daß dann einzelne benachbarte Bildobjekte zusammengefaßt oder bereits gebildete Bildobjekte durch Abspaltung von Teil-Bildobjekten modifiziert werden, wenn ein Merkmal oder mehrere Merkmale der einzelnen benachbarten Bildobjekte anhand von bestimmten Homogenitätskriterien als übereinstimmend .bzw. als nicht übereinstimmend eingestuft werden, wobei
   die Segmentierung iterativ über alle Bildobjekte wiederholt durchgeführt wird,
   **dadurch gekennzeichnet, daß**
   ein in dem Homogenitätskriterium mit einer Toleranz zu vergleichender Merkmalsunterschied über die bei einer potentiellen Zusammenfassung der einzelnen benachbarten Bildobjekte entstehende Heterogenität bestimmt wird.

2. Verfahren nach Anspruch 1, **dadurch gekennzeichnet, daß** die Differenz zwischen der mit der Größe der einzelnen benachbarten Bildobjekte gewichteten Heterogenität der einzelnen benachbarten Bildobjekte nach der Fusion und vorher bestimmt wird, so daß das Homogenitätskriterium die Form

$$\Delta h_{gew} = (n_1 + n_2)\, h_{neu} - (n_1\, h_1 + n_2\, h_2) < \alpha \tag{1}$$

erhält, wobei $\alpha$ die vorzugebende Toleranz ist, $h_1$ und $h_2$ die Heterogenitäten der einzelnen benachbarten Bildobjekte sind, $n_1$ und $n_2$ die Größen der einzelnen benachbarten Bildobjekte sind und $h_{neu}$ die Heterogenität des potentiell neu entstehenden Bildobjekts ist.

3. Verfahren nach Anspruch 2, **dadurch gekennzeichnet, daß** Bildobjekte in einer hierarchischen Struktur von Bildobjekten vorliegen, auf deren unterster hierarchischer Bildobjekt-Ebene sich die Bildelemente befinden, die dann zumindest auf der nächst höheren Bildobjekt-Ebene zu Ober-Bildobjekten zusammengefaßt sind, die wiederum auf eine hierarchische Weise einmal oder mehrmals als Unter-Bildobjekte zu Ober-Bildobjekten zusammenfaßbar sind.

4. Verfahren nach Anspruch 3, **dadurch gekennzeichnet, daß** die Heterogenität eines Bildobjekts in Ungleichung (1) definiert ist als die Standardabweichung von Farbmittelwerten der Unter-Bildobjekte auf einer bestimmten tieferen Bildobjekt-Ebene des jeweiligen Bildobjekts, so daß als Homogenitätskriterium die Ungleichung

$$\Delta h_{gew} - \Delta\sigma_{gew} = n_1(\sigma_{neu} - \sigma_1) + n_2\,(\sigma_{neu} - \sigma_2) < \alpha \tag{2}$$

herangezogen wird, wobei $\sigma_1$ und $\sigma_2$ die Standardabweichungen der einzelnen benachbarten Bildobjekte sind und $\sigma_{neu}$ die Standardabweichung des potentiell neu entstehenden Bildobjekts ist.

5. Verfahren nach Anspruch 3, **dadurch gekennzeichnet, daß** die Heterogenität eines Bildobjekts in Ungleichung (1) definiert ist als die Varianz von Farbmittelwerten der Unter-Bildobjekte auf einer bestimmten tieferen Bildobjekt-Ebene des jeweiligen Bildobjekts, so daß als Homogenitätskriterium die Ungleichung

$$\Delta h_{gew} = \Delta var_{gew} = n_1(var_{neu} - var_1) + n_2(var_{neu} - var_2) < \alpha \tag{3}$$

herangezogen wird, wobei $var_1$ und $var_2$ die Varianzen der einzelnen benachbarten Bildobjekte sind und $var_{neu}$ die Varianz des potentiell neu entstehenden Bildobjekts ist.

6. Verfahren nach Anspruch 3, **dadurch gekennzeichnet, daß** die eingetragene Heterogenität in Ungleichung (1) über die gewichtete Differenz von Farbmittelwerten der Bildobjekte vor und nach der Fusion bestimmt wird, so daß als Homogenitätskriterium die Ungleichung

$$\Delta m_{gew} = n_1\, |m_{neu} - m_1| + n_2|m_{neu} - m_2| < \alpha \tag{4}$$

11

herangezogen wird, wobei $m_1$ und $m_2$ die Farbmittelwerte der einzelnen benachbarten Bildobjekte sind und $m_{neu}$ der Farbmittelwert des potentiell neu entstehenden Bildobjekts ist.

**7.** Verfahren nach Anspruch *3, dadurch gekennzeichnet, daß* Bildbereiche mit kontinuierlichen Farbübergängen zusammengefaßt werden und die Heterogenität eines Bildobjekts in Ungleichung (1) definiert ist als der mittlere Abstand bzw. der gemittelte Wert der Quadrate der Abstände von Farbmittelwerten der Unter-Bildobjekte auf einer bestimmten tieferen Bildobjekt-Ebene des jeweiligen Bildobjekts, je nach Dimensionalität des Ortsraums bezogen auf die Regressionsgerade, Regressionsfläche oder Regressionshyperfläche dieser Farbmittelwerte in dem Ortsraum oder bezogen auf eine andere Näherungsfunktion an diese Farbmittelwerte in dem Ortsraum.

**8.** Verfahren nach einem der Ansprüche 3 bis *7, dadurch gekennzeichnet, daß* eine neue Bildobjekt-Ebene an einer beliebigen hierarchischen Stufe der hierarchischen Struktur der Bildobjekte eingeführt wird, indem zu Beginn jedes Bildobjekt der nächst unteren Bildobjekt-Ebene dupliziert wird und das derart neu entstandene Bildobjekt als neues Ober-Bildobjekt des bisherigen Bildobjekts eingesetzt wird, wobei, wenn eine neue Bildobjekt-Ebene direkt über den Bildelementen eingeführt wird, zu jedem Bildelement ein Bildobjekt als Ober-Bildobjekt geschaffen wird, das dieses eine Bildelement enthält.

**9.** Verfahren nach einem der Ansprüche 3 bis 8, *dadurch gekennzeichnet, daß* eine neue Bildobjekt-Ebene an einer beliebigen hierarchischen Stufe der hierarchischen Struktur der Bildobjekte eingeführt wird, indem nacheinander alle Bildobjekte der nächst tieferen Bildobjekt-Ebene jeweils einmal hehandelt werden und dann. wenn ein Bildobiekt der nächst tieferen Bildobjekt-Ebene mit einem anderen benachbarten Bildobjekt zusammenzufassen ist und weder das eine noch das andere Bildobjekt in ein Ober-Bildobjekt auf der neuen Ebene eingebunden ist, ein neues Ober-Bildobjekt auf der neuen Bildobjekt-Ebene gegründet wird, das als Ober-Bildobjekt die beiden zusammenzufassenden Bildobjekte beinhaltet, oder daß, wenn das benachbarte Bildobjekt bereits ein Ober-Bildobjekt auf der neuen Bildobjekt-Ebene ist, das Bildobjekt als Unter-Bildobjekt in das Ober-Bildobjekt aufgenommen wird, wobei lediglich derartige benachbarte Bildobjekte zusammengefaßt werden, die das gleiche oder kein weiteres Ober-Bildobjekt aufweisen.

**10.** Verfahren nach einem der Ansprüche 3 bis 9, *dadurch gekennzeichnet, daß* die Reihenfolge, in der Bildobjekte einer Bildobjekt-Ebene innerhalb eines bestimmten Bildausschnitts jeweils einmal durch Zusammenfassung mit einem benachbarte Bildobjekt verändert werden,

eine Reihenfolge ist, die einen möglichst großen Abstand zu schon bearbeiteten Bildobjekten gewährleistet,

eine stochastische oder pseudo-stochastische Reihenfolge ist,

eine Reihenfolge ist, bei der in mehrfachen, wiederholten Durchgängen auf einer Bildobjekt-Ebene innerhalb eines Durchgangs jedes Bildobjekt, das zu Beginn des Durchgangs vorhanden ist, höchstens einmal durch Zusammenfassung verändert wird, und/oder

eine Reihenfolge ist; die innerhalb eines Durchgangs den größtmöglichen Abstand zu schon bearbeiteten Bildobjekten gewährleistet.

**11.** Verfahren nach einem der Ansprüche 3 bis 10, *dadurch gekennzeichnet, daß* Bildobjekte durch Abstoßung von Teil-Bildobjekten verändert werden, wenn das Homogenitätskriterium zwischen dem abzustoßenden Teil-Bildobjekt und dem Rest des ursprünglichen Bildobjekts nicht mehr erfüllt ist.

**12.** Verfahren nach Anspruch 11, *dadurch gekennzeichnet, daß* als eine Randkorrektur ein Rand-Bildobjekt, das sich an einem Rand eines Bildobjekts befindet und das Homogenitätskriterium sowohl mit dem bisherigen als auch mit mindestens einem benachbarten Bildobjekt erfüllt, demjenigen Bildobjekt zugeordnet wird, mit dem das Homogenitätskriterium am besten erfüllt ist.

**13.** Verfahren nach Anspruch 12, *dadurch gekennzeichnet, daß* die Randkorrektur entweder direkt nach jeder Zusammenfassung auf ein betroffene Bildobjekt angewendet wird oder durchgangsweise mit einer Zusammenfassung abwechselt.

**14.** Verfahren nach Anspruch 12 oder 13, *dadurch gekennzeichnet, daß* dann, wenn das Rand-Bildobjekt das Homogenitätskriterium sowohl mit dem bisherigen als auch mit mindestens einem benachbarten Bildobjekt erfüllt, Merkmalsverteilungen der beteiligten Bildobjekte berechnet und hieraus die Zugehörigkeit des betreffenden Rand-Bildobjekts ermittelt wird, wobei das Rand-Bildobjekt demjenigen Bildobjekt zugeordnet wird, in dem ein Merkmalswert am häufigsten auftritt, oder aus der Auftretenshäufigkeit in den beteiligten Bildobjekten Wahrscheinlichkeiten berechnet werden, über die das Rand-Bildobjekt probabilistisch einem der beteiligten Bildobjekte zugeordnet wird.

**15.** Verfahren nach Anspruch 14, *dadurch gekennzeichnet, daß* für die Merkmalsverteilungen jeweilige Histogramme der Merkmale der beteiligten Bildobjekte herangezogen wird.

**16.** Verfahren nach einem der Ansprüche 11 bis 15, *dadurch gekennzeichnet, daß* dann, wenn bei der Randkorrektur ein Bildobjekt der nächst tieferen hierarchischen Bildobjekt-Ebene von einem Bildobjekt in ein anderes Bildobjekt umgelagert wird, die zusammenhängendheit des einen Bildobjekts überprüft wird, und bei Nicht-Zusammenhängendheit das eine Bildobjekt in die entsprechenden, durch die Trennung entstandenen zusammenhängenden Bildobjekte aufgeteilt wird.

**17.** Verfahren nach einem der Ansprüche 13 bis 15, *dadurch gekennzeichnet, daß* das zu segmentierende digitale Bild aus mehreren Kanälen mit unterschiedlichen Informationsgehalten besteht und Rand-Bildobjekte lediglich dann aus einem Bildobjekt entfernt und dem benachbarten Bildobjekt zugeordnet werden, wenn eine über alle Kanäle gemittelte Zugehörigkeit zu dem benachbarten Bildobjekt größer als eine über alle Kanäle gemittelte Zugehörigkeit zu dem bisherigen Bildobjekt ist.

**18.** Verfahren nach einem der Ansprüche 1 bis 17, *dadurch gekennzeichnet, daß* lediglich dann zusammengefaßt wird, wenn ein in dem Homogenitätskriterium definierter Merkmalsunterschied für eines der einzelnen benachbarten Bildobjekte im Vergleich zu seinen anderen benachbarten Bildobjekten am kleinsten ist und innerhalb der vorgegebenen Toleranz liegt, wodurch das Homogenitätskriterium am besten erfüllt ist.

**19.** Verfahren nach einem der Ansprüche 1 bis 17, *dadurch gekennzeichnet, daß* lediglich dann zusammengefaßt wird, wenn für die einzelnen benachbarten Bildobjekte ein in dem Homogenitätskriterium definierter Merkmalsunterschied im Vergleich zu den anderen benachbarten Bildobjekten am kleinsten ist und innerhalb der vorgegebenen Toleranz liegt, wodurch das Homogenitätskriterium gegenseitig am besten erfüllt ist.

**20.** Verfahren nach einem der Ansprüche 1 bis 17, *dadurch gekennzeichnet, daß* lediglich dann zusammengefaßt wird, wenn ein in dem Homogenitätskriterium definierter Merkmalsunterschied im Vergleich zu allen anderen möglichen Zusammenfassungen von Bildobjekten auf der gleichen Bildobjekt-Ebene in dem gesamten zu segmentierenden Bildbereich am kleinsten ist und innerhalb der vorgegebenen Toleranz liegt, wodurch das Homogenitätskriterium global bestpassend erfüllt ist.

**21.** Verfahren nach einem der Ansprüche 11 bis 17, *dadurch gekennzeichnet, daß* bei der Zusammenfassung oder Randkorrektur abhängig von bestimmten Merkmalskriterien der einzelnen benachbarten Bildobjekte, wie zum Beispiel Kompaktheit, Größe, Randrauhigkeit, Linienhaftigkeit, Gradient des Farbverlaufs, oder ihrer Klassifikation objektbezogen verschiedenene Homogenitätskriterien verwendet werden.

**22.** Verfahren nach einem der Ansprüche 3 bis 21, *dadurch gekennzeichnet, daß* eine Fusion von zwei Bildobjekten auf der gleichen hierarchischen Bildobjekt-Ebene, eine Anlagerung eines benachbarten Bildobjekts der nächst tieferen hierarchischen Bildobjekt-Ebene, eine Abstoßung eines Bildobjekts der nächst tieferen hierarchischen Bildobjekt-Ebene und/oder ein Austausch eines sich am Rand eines Bildobjekts befindenden Unter-Bildobjekts auf allen hierarchischen Ebenen Struktur der Bildobjekte auf gleiche Weise angewendet werden.

**23.** Verfahren nach einem der Ansprüche 3 bis 22, *dadurch gekennzeichnet, daß* das zu segmentierende digitale Bild aus mehreren Kanälen mit unterschiedlichen Informationsgehalten besteht und für das Homogenitätskriterium die Standardabweichungen, Varianzen bzw. Mittelwerte von Farbwerten der in einem jeweiligen Bildobjekt enthaltenen Bildobjekte einer bestimmten tieferen Bildobjekt-Ebene über alle Kanäle aufaddiert oder gemittelt werden, wobei die Kanäle verschieden gewichtet sein können.

**24.** Verfahren nach einem der vorhergehenden Ansprüche, *dadurch gekennzeichnet, daß* gleichzeitig zu dem Segmentieren ebenso ein Segmentieren von Linien durchgeführt wird, und ein Formmerkmal Linienhaftigkeit eingeführt wird, welches zum Beispiel das Verhältnis von Länge zu Breite eines Bildobjekts angibt, und ein Bild zunächst segmentiert wird, zusätzlich aber jedes Bildobjekt, das eine bestimmte Linienhaftigkeit überschreitet, ebenso als ein Linienobjekt behandelt wird.

**25.** Verfahren nach Anspruch 24, *dadurch gekennzeichnet, daß* die Behandlung eines Bildobjekts als Linienobjekt eine Nachbarschaft dadurch erweitert, daß bei einem derartigen Bildobjekt in Richtung seiner Linienenden

## EP 0 858 051 B1

über die direkte Nachbarschaft hinaus bis zu einer bestimmten Entfernung und in einem bestimmten Winkelsektor nach passenden die Linie ergänzenden Bildobjekten gesucht wird,

abhängig davon, wie gut die Linie des bisherigen Linienobjekts ergänzt wird, einen Faktor bestimmt, der einen in dem Homogenitätskriterium bestimmten Passungswert verbessert, so daß bei gleichem Passungswert linienhaftes dem üblichen Zusammenfassen vorgezogen wird,

Kriterien dafür bestimmt, wie gut eine Linie ergänzt wird, wie eine Verbesserung der Linienhaftigkeit des bisherigen Linienobjekts zusätzlich zu gleichem Farbkontrast zur Umgebung und/oder gleicher Farbe, und/oder

wenn ein passendes Bildobjekt nicht in nicht direkter Nachbarschaft gefunden wird, eine möglichst dünne Verbindung zwischen den nicht benachbarten Bildobjekten erstellt, so daß das Linienobjekt in jedem Fall diagonal zusammenhängend ist.

26. Verfahren nach Anspruch 24 oder 25, **dadurch gekennzeichnet, daß** bei zusätzlicher Durchführung von linienhaftem Segmentieren anfangs mit einer diagonalen Nachbarschaft segmentiert wird, wobei kleine und linienhafte Bildobjekte diagonal zusammenhängend sind und alle anderen Bildobjekte plan zusammenhängend sind, wobei, wenn ein bisher kleines, diagonal zusammenhängendes Bildobjekt die kritische Größe überschreitet oder wenn ein bisher linienhaftes Bildobjekt durch Flächenfusion eine kritische Linienhaftigkeit unterschreitet, es in seine plan zusammenhängenden Unter-Bildobjekte zerlegt wird.

27. Verfahren nach einem der vorhergehenden Ansprüche, **dadurch gekennzeichnet, daß** die Bildobjekte in stochastischer oder pseudo-stochastischer Reihenfolge bearbeitet werden.

28. Verfahren nach einem der vorhergehenden Ansprüche, **dadurch gekennzeichnet, daß** die Iteration solange wiederholt wird, bis eine stabile oder annähernd stabile Segmentbildung erzielt ist.

29. Verfahren nach einem der vorhergehenden Ansprüche, **dadurch gekennzeichnet, daß**

eine hierarchische Objektstruktur erstellt wird und eine hierarchische Bearbeitungsreihenfolge zunächst bei einer niedrigst möglichen Bildobjekt-Ebene beginnt und dann schrittweise höhere Bildobjekt-Ebenen behandelt,

die hierarchische Bearbeitungsreihenfolge zunächst bei der höchst möglichen Bildobjekt-Ebene beginnt und dann schrittweise tiefere Bildobjekt-Ebenen behandelt, oder

die hierarchische Bearbeitungsreihenfolge beliebig ist und eine neue hierarchische Bildobjektebene bzw. einzelne Bildobjekte auf eine derartige Weise auch zwischen zwei andere Bildobjekt-Ebenen eingeschoben werden, wobei

in den letzten beiden Fällen ein Zusammenfassen von benachbarten Bildobjekten lediglich möglich ist, wenn sie das gleiche Bildobjekt als Ober-Bildobjekt aufweisen.

30. Verfahren nach einem der vorhergehenden Ansprüche, **dadurch gekennzeichnet, daß** das zu segmentierende digitale Bild aus mehreren Kanälen mit unterschiedlichen Informationsgehalten besteht und Bildobjekte nur dann zusammengefaßt werden, wenn das herangezogene Homogenitätskriterium jeweils für jeden der Kanäle erfüllt ist.

31. Verfahren nach einem der vorhergehenden Ansprüche, **dadurch gekennzeichnet, daß** für eine Bestimmung von Bildobjekteigenschaften bei ausreichend großen Bildobjekten keine Rand-Bildelemente herangezogen werden.

**Claims**

1. A method for segmentation of a digital picture consisting of a multiplicity of single picture elements, wherein for digital picture processing, object recognition and/or pattern recognition picture objects consisting of picture elements and/or picture segments are formed in that single contiguous picture objects are combined or already formed picture objects are modified by segregation of partial picture objects whenever one feature or several features of the single contiguous picture objects are judged to be conforming or not conforming by means of specific homogeneity criteria, wherein

the segmentation is performed in an iteratively repeated manner through all picture objects,

**characterized in that**

a feature difference to be compared in the homogeneity criterion with the tolerance is determined via the heterogeneity arising from a combination of the single contiguous picture objects.

2. The method of claim 1, **characterized in that** the difference between the heterogeneity of the single contiguous picture objects weighted with the size of the single contiguous picture objects after the merging and before is determined, so that the homogeneity criterion attains the form

$$\Delta h_{gew}= (n_1 +n_2)h_{neu} -(n_1 h_1 +n_2 h_2) < \alpha \qquad (1)$$

wherein $\alpha$ is the tolerance to be predetermined, $h_1$ and $h_2$ are heterogeneities of the single contiguous picture objects, $n_1$ and $n_2$ are the sizes of the single contiguous picture objects, and $h_{neu}$ is the heterogeneity of the potentially newly engendered picture object.

3. The method of claim 2, *characterized in that* picture objects are present in a hierarchical structure of picture objects on the lowest hierarchical picture object plane of which the picture elements are located, which are then at least on the next higher picture object plane combined into superordinate picture objects, which may in turn be combined once or several times as subordinate picture objects into superordinate picture objects in a hierarchical manner.

4. The method of claim 3, *characterized in that* the heterogeneity of a picture object is defined in inequation (1) as the standard deviation of color mean values from the subordinate picture objects on a specific lower picture object plane of the respective picture object, so that as the homogeneity criterion the inequation

$$\Delta h_{gew}=\Delta \sigma_{gew}=n_1(\sigma_{neu}- \sigma_1)+n_2(\sigma_{neu}- \sigma_2 ) < \alpha \qquad (2)$$

is referred to, wherein $\sigma_1$ and $\sigma_2$ are the standard deviations of the single contiguous picture objects, and $\alpha_{neu}$ is the standard deviation of the potentially newly engendered picture object.

5. The method of claim 3, *characterized in that* the heterogeneity of a picture object is defined in inequation (1) as the variance of color mean values of the subordinate picture objects on a specific lower picture object plane of the respective picture object, so that as the homogeneity criterion the inequation

$$\Delta h_{gew} = \Delta \, var_{gew} =n_1(var_{neu}-var_1)+n_2(var_{neu} - var_2) < \alpha \qquad (3)$$

is referred to, wherein $var_1$ and $var_2$ are the variances of the single contiguous picture objects and $var_{neu}$ is the variance of the potentially newly engendered picture object.

6. The method of claim 3, *characterized in that* the introduced heterogeneity is determined in inequation (1) via the weighted difference of color mean values of the picture objects before and after the merging, so that as the homogeneity criterion the inequation

$$\Delta m_{gew} = n_1|m_{neu}-m_1|+ n_2|m_{neu}- m_2| < \alpha \qquad (4)$$

is referred to, wherein $m_1$ and $m_2$ are the color mean values of the single contiguous picture objects, and $m_{neu}$ is the color mean value of the potentially newly engendered picture object.

7. The method of claim 3, *characterized in that* picture regions having continuous color transitions are combined and the heterogeneity of a picture object is defined in inequation (1) as the average distance, or the averaged value of the squares of the distances, of color mean values of the subordinate picture objects on a specific lower picture object plane of the respective picture object, depending on the dimensionality of the topical space in relation to the regression line, regression surface or regression hypersurface of these color mean values in the topical space, or in relation to another function of approximation to these color mean values in the topical space.

8. The method of one of claims 3 to 7, *characterized in that* a new picture object plane is introduced in any hierarchical level of the hierarchical structure of the picture objects by initially duplicating every picture object of the next lower picture object plane and inserting the thus newly created picture object as a new superordinate picture object of the previous picture object, wherein, when a new picture object plane is introduced directly above the picture elements, for every picture element a picture object containing this one picture element is created as a superordinate picture object.

9. The method of one of claims 3 to 8, *characterized in that* a new picture object plane is introduced on any hierarchical level of the hierarchical structure of the picture objects by successively processing all picture objects of the next lower picture object plane once each, and whenever a picture object of the next lower picture object plane is to be combined with another contiguous picture object while neither the one nor the other picture object is bound in a superordinate picture object on the new plane, a new superordinate picture object is founded on the new picture object plane which, as the superordinate picture object, contains the two picture objects to be combined, or that, when the contiguous picture object already is a superordinate picture object on the new picture object plane, the picture object is incorporated into the superordinate picture object as a subordinate object in such a manner that only those contiguous picture objects are combined which have the same or no other superordinate picture object.

10. The method of one of claims 3 to 9, *characterized in that* the order in which the picture objects of a picture object plane within a specific picture detail are modified once each by combination with a contiguous picture object

is an order which ensures a maximum possible distance from already processed picture objects,

is a stochastic or pseudo-stochastic order,

is an order wherein in multiple, repeated runs on a picture object plane within one run each picture object present at the beginning of the run is modified by combination once at the most, and/or

is an order which ensures the maximum possible distance from picture objects already processed within one run.

11. The method of one of claims 3 to 10, *characterized in that* the picture objects are modified by exclusion of partial picture objects when the homogeneity criterion between the partial picture object to be excluded and the remaining original picture object is not satisfied any more.

12. The method of claim 11, *characterized in that* as boundary correction a boundary picture object located at a boundary of a picture object and satisfying the homogeneity criterion with the previous as well as with at least one contiguous picture object, is allocated to the one picture object with which the homogeneity criterion is satisfied best.

13. The method of one claim 12, *characterized in that the* boundary correction either is applied immediately after every merging to the respective picture object, or alternates in consecutive runs with merging.

14. The method of one of claim 12 or 13, *characterized in that* whenever a boundary picture object satisfies the homogeneity criterion with the previous as well as with at least one contiguous picture object, feature distributions of the involved picture objects are calculated and based thereon the pertinence of the respective boundary picture object is determined in such a manner that the boundary picture object is allocated to the one picture object wherein a feature value occurs most frequently, or based on the frequency of occurrence in the involved picture objects probabilities are calculated, whereby the boundary picture object is allocated to one of the involved picture objects in a probabilistic manner.

15. The method of claim 14, *characterized in that* for the distribution of features respective histograms of the features of the involved picture objects are referred to.

16. The method of one of claims 11 to 15, *characterized in that* whenever during boundary correction a picture object of the next lower hierarchical plane of the picture objects is re-grouped from one picture object into another picture object, the coherence of the one picture object is examined, and in the case of non-coherence the one picture object is divided into the corresponding coherent picture objects engendered by the separation.

17. The method according to one of claims 13 to 15, *characterized in that* the digital picture to be segmented consists of a plurality of single channels having a different information contents, and boundary picture objects are removed from a picture object and allocated to the contiguous picture object only when the pertinence to the contiguous picture object averaged through all channels is greater than the pertinence to the previous picture object averaged through all channels.

18. The method of one of claims 1 to 17, *characterized in that* combination is performed only if a feature difference defined in the homogeneity criterion for one of the single contiguous picture objects is smallest in comparison with its other contiguous objects and contained within the predetermined tolerance, whereby the homogeneity criterion is satisfied best.

19. The method of one of claims 1 to 17, *characterized in that* combination is performed only if for single contiguous picture objects a feature difference defined in the homogeneity criterion is smallest in comparison with the respective other contiguous objects and is contained within the predetermined tolerance, whereby the homogeneity criterion is mutually satisfied best.

20. The method of one of claims 1 to *17, characterized in that* combination is performed only if a feature difference defined in the homogeneity criterion is smallest in comparison with all other possible combinations of picture objects on the same picture object plane in the entire picture region to be segmented and is contained within the predetermined tolerance, whereby the homogeneity criterion is global satisfied best.

21. The method of one of claims 11 to 17, *characterized in that* in merging or boundary correction, object-related various homogeneity criteria are employed in accordance with specific feature criteria of the single contiguous picture objects such as for example compactness, size, boundary roughness, linearity, gradient of the color development, or their classification.

22. The method of one of claims 3 to 21, *characterized in that* merging of two picture objects on a same hierarchy plane, addition of a contiguous picture object of the next lower hierarchy plane, exclusion of a picture object of the next lower hierarchy plane and/or exchange of a subordinate picture object located at the boundary of a picture object are applied in the same manner on all hierarchy planes of the structure of the picture objects.

23. The method of one of claims 3 to 22, *characterized in that* the digital picture to be segmented consists of a plurality of channels having different information contents and for the homogeneity criterion the standard deviations, variances or mean values of color values of the picture objects of a specific lower picture object plane contained in the respective picture object are added up or averaged through all channels, wherein the channels may be weighted differently.

24. The method of one of the preceding claims, *characterized in that* concurrently with the segmentation a segmentation of lines is equally performed, and a shape feature linearity is introduced, which for example indicates the ratio of length and width of a picture object, and a picture is initially segmented, however additionally every picture object exceeding a specific linearity is equally processed as a line object.

25. The method according to claim 24, *characterized in that* processing of a picture object as a line object

expands contiguity inasmuch as in a like picture object matching picture objects complementing the line are searched in the direction of the line ends beyond the immediate vicinity as far as a specific distance and in a sector having a specific angle,

depending on how well the line is complemented by the previous line objects, determines a factor which improves the matching value determined in the homogeneity criterion, so that in the case of an identical matching value linear combination is preferred to the usual combination,

determines criteria for how well a line is complemented, such as an improvement of the linearity of the previous line object in addition to an identical color contrast with the surroundings and/or identical color, and/or

if a matching picture object is not found in the immediate vicinity, establishes a connection having a minimum possible thickness between the non-contiguous picture objects, so that the line object is in any case diagonally coherent.

26. The method according to claim 24 or 25, *characterized in that* upon additionally performing linear segmentation, segmentation is initially performed with diagonal vicinity, wherein small and linear picture objects have diagonal coherence and all other picture objects have planar coherence, wherein, if a hitherto small, diagonally coherent picture object exceeds the critical size or if a hitherto linear picture object drops below the critical linearity by area merging, it is divided into its components having planar coherence.

27. The method of one of the preceding claims, *characterized in that* the picture objects are processed in a stochastic or pseudo-stochastic order.

28. The method of one of the preceding claims, *characterized in that* the iteration is repeated until a stable or approximately stable segment formation is achieved.

**29.** The method of one of the preceding claims, ***characterized in that***

a hierarchical object structure is established and a hierarchical order of processing initially starts on the lowest possible picture object plane to then stepwise process higher picture object planes,

the hierarchical order of processing initially starts on the highest possible picture object plane to then stepwise process lower picture object planes, or

the hierarchical order of processing is any desired one and a new hierarchy picture object plane or single picture objects are also inserted between two other picture object planes, wherein

in the latter two cases a combination of contiguous picture objects is possible only if they have a same picture object as the superordinate picture object.

**30.** The method of one of the preceding claims, ***characterized in that*** *the* digital picture to be segmented consists of a plurality of channels having different information contents, and picture objects are combined only if the respective homogeneity criterion referred to is satisfied for each one of the channels.

**31.** The method of one of the preceding claims, ***characterized in that*** boundary picture objects are not referred to for determination of properties of picture objects in sufficiently large picture objects.


**Revendications**

**1.** Procédé pour segmenter une image numérique constituée par une multiplicité d'éléments d'images individuels, et dans lequel pour le traitement numérique de l'image, l'identification numérique d'objets et/ou l'identification de modèles on forme des objets d'image, qui sont constitués par des éléments d'image et/ou des segments d'image en rassemblant des objets d'image individuels voisins ou des objets d'image déjà formés ou en modifiant les objets d'image déjà formés, par séparation d'objets d'image partiels, lorsqu'une caractéristique ou plusieurs caractéristiques des objets d'image individuels voisins sont classés comme étant coïncidents ou non coïncidents en fonction de critères déterminés d'homogénéité, selon lequel

la segmentation est répétée de façon itérative sur tous les objets d'images,

**caractérisé en ce**

**qu'**on détermine une différence de caractéristique, devant être comparée à un critère d'homogénéité avec une tolérance, au moyen de l'hétérogénéité qui apparaît lors d'une réunion potentielle des objets d'image individuels voisins.

**2.** Procédé selon la revendication 1, **caractérisé en ce que** la différence entre les hétérogénéités des objets d'image individuels voisins, pondérées avec la grandeur des objets d'image individuels voisins, est déterminée après la fusion et auparavant de sorte que le critère d'homogénéité prend la forme

$$\Delta h_{\text{pondérée}} = (n_1 + n_2)\, h_{\text{nouvelle}} - (n_1 h_1 + n_2 h_2) < \alpha \qquad (1)$$

$\alpha$ étant la tolérance devant être prédéterminée, $h_1$ et $h_2$ des hétérogénéités des objets d'image individuels voisins, $n_1$ et $n_2$ les grandeurs des objets d'image individuels voisins et $h_{\text{nouvelle}}$ l'hétérogénéité de l'objet d'image qui apparaît éventuellement à nouveau.

**3.** Procédé selon la revendication 2, **caractérisé en ce que** les objets d'images sont présents selon une structure hiérarchique d'objets d'image, dans le plan hiérarchique le plus inférieur desquels sont situés les éléments d'imagé, qui sont alors rassemblés au moins dans le plan immédiatement plus élevé d'objets d'image pour former des objets d'image de rang supérieur, qui à nouveau peuvent être rassemblés d'une manière hiérarchique une fois ou à plusieurs reprises en tant qu'objets d'image de rang inférieur pour former des objets d'image de rang supérieur.

**4.** Procédé selon la revendication 3, **caractérisé en ce que** l'hétérogénéité d'un objet d'image dans l'inégalité (1) est définie comme étant l'écart-type de valeurs moyennes de couleur des objets d'image de rang inférieur dans un plan inférieur déterminé de l'objet d'image respectif de sorte qu'on utilise comme critère d'homogénéité l'inégalité

$$\Delta h_{\text{pondérée}} = \Delta \sigma_{\text{pondérée}} = n_1\,(\sigma_{\text{nouveau}} - \sigma_1) + n_2\,(\sigma_{\text{nouveau}} - \sigma_2) < \alpha \qquad (2)$$

$\sigma_1$ et $\sigma_2$ représentant les écarts-types des objets d'image individuels différents et $\sigma$ étant l'écart-type de l'objet d'image éventuellement nouvellement apparu.

**5.** Procédé selon la revendication 3, **caractérisé en ce que** l'hétérogénéité d'un objet d'image dont l'inégalité (1) est définie en tant que variance de valeurs moyennes de couleur des objets d'image de rang inférieur dans un plan inférieur déterminé de l'objet d'image respectif de sorte qu'on utilise comme critère d'homogénéité l'inégalité

$$\Delta h_{pond\acute{e}r\acute{e}} = \Delta var_{pond\acute{e}r\acute{e}e} = n_1 (var_{nouvelle} - var_1) + n_2 (var_{nouvelle} - var_2) < \alpha \tag{3}$$

$var_1$ et $var_2$ représentant les variances des objets d'image individuels voisins et $var_{nouvelle}$ la variance de l'objet d'image éventuellement nouvellement apparu.

**6.** Procédé selon la revendication 3, **caractérisé en ce que** l'hétérogénéité introduite dans l'inégalité (1) est déterminée au moyen de la différence pondérée de valeur moyenne de couleur des objets d'image avant et après la fusion, de sorte qu'on utilise comme critère d'homogénéité l'inégalité

$$\Delta m_{pond\acute{e}r\acute{e}e} = n_1 |m_{nouvelle}\, m_1| + n_2 |m_{nouvelle} - m_2| < \alpha \tag{4}$$

$m_1$ et $m_2$ étant les valeurs moyennes de couleur des objets d'image individuels voisins et $m_{nouvelle}$ la valeur moyenne de couleur de l'objet d'image éventuellement nouvellement apparue.

**7.** Procédé selon la revendication 3, **caractérisé en ce que** des zones d'image ayant des jonctions continues de couleur sont rassemblées et que l'hétérogénéité d'un objet d'image dans l'inégalité (1) est définie comme étant la distance moyenne ou la valeur moyenne des carrés des distances de valeurs moyennes de couleur des objets d'image de rang inférieur dans un plan inférieur déterminé de l'objet d'image respectif, en fonction de la dimensionnalité de l'espace local rapportée à la droite de régression, à la surface de régression ou à l'hyper-surface de régression de ces valeurs moyennes de couleur dans l'espace local ou rapportée à une autre fonction d'approximation de ces valeurs moyennes de couleur dans l'espace local.

**8.** Procédé selon l'une des revendications 3 à 7, **caractérisé en ce qu'**un nouveau plan d'objets d'image est introduit au niveau de n'importe quel étage hiérarchique de la structure hiérarchique des structures des objets d'image, par le fait qu'au début de chaque objet d'image, le plan immédiatement inférieur d'objets d'image est dupliqué et l'objet d'image ainsi nouvellement obtenu est utilisé en tant que nouvel objet d'image de rang supérieur de l'objet d'image présent jusqu'alors, auquel cas, lorsqu'un nouveau plan d'objets d'image est introduit directement au moyen des éléments d'image, pour chaque élément d'image un objet d'image est créé en tant qu'objet d'image de rang supérieur, qui contient cet élément d'image.

**9.** Procédé selon l'une des revendications 3 à 8 **caractérisé en ce qu'**un nouveau plan d'objets d'image est introduit en n'importe quel échelon hiérarchique de la structure hiérarchique des objets d'image, par le fait que tous les objets d'image du plan immédiatement inférieur d'objets d'image sont respectivement traités successivement une fois, puis, lorsqu'un objet d'image du plan immédiatement inférieur d'objets d'image doit être réuni à un autre objet d'image voisin, et que ni l'un ni l'autre des objets d'image dans un objet d'image de rang supérieur n'est lié au nouveau plan, un nouvel objet d'image de rang supérieur est créé dans le nouveau plan d'objets d'image, ce nouvel objet d'image de rang supérieur contenant, er tant qu'objet d'image de rang supérieur, les deux objets d'image devant être réunis, ou que, lorsque l'objet d'image voisin est déjà un objet d'image de rang supérieur dans le nouveau plan d'objets d'image, l'objet d'image en tant qu'objet d'image de rang inférieur est reçu dans l'objet d'image de rang supérieur, auquel cas seuls sont rassemblés des objets d'image voisins, qui comportent le même objet d'image de rang supérieur ou ne comportent aucun objet d'image de rang supérieur.

**10.** Procédé selon l'une des revendications 3 à 9, **caractérisé en ce que** la séquence, avec laquelle des objets d'image d'un plan d'objets d'image sont modifiés à l'intérieur d'une section déterminée d'image respectivement une fois par réunion à un autre objet d'image voisin,

est une séquence qui garantit une distance aussi grande que possible par rapport à des objets d'image déjà traités,

est une séquence stochastique ou pseudo-stochastique,

est une séquence, dans laquelle lors de plusieurs explorations répétées dans un plan d'objets d'image, pendant une exploration de chaque objet d'image, qui est présent au début de l'exploration, est modifié au maximum une fois par la réunion, et/ou

est une séquence qui, au cours d'une exploration, garantit la distance maximale possible par rapport à des objets d'image déjà traités.

11. Procédé selon l'une des revendications 3 à 10, **caractérisé en ce que** les objets d'image sont modifiés par refoulement des objets d'image par retrait d'objets d'image partiel, lorsque le critère d'homogénéité entre l'objet d'image partiel devant être retiré et le reste de l'objet d'image n'est plus satisfait.

12. Procédé selon la revendication 11, **caractérisé en ce qu'**en temps de correction de bord un objet d'image de bord, qui est situé au niveau d'un bord d'un objet d'image et qui satisfait au critère d'homogénéité aussi bien avec l'objet d'image présent jusqu'alors qu'avec au moins un objet d'image voisin, auquel est associé l'objet d'image, avec lequel le critère d'homogénéité est le mieux satisfait.

13. Procédé selon la revendication 12, **caractérisé en ce que** la correction de bord soit est appliquée directement après chaque réunion, à un objet d'image concerné, soit alterne conformément à l'exploration avec une réunion.

14. Procédé selon la revendication 12 ou 13, **caractérisé en ce que**, lorsque l'objet d'image de bord satisfait au critère d'homogénéité aussi bien avec l'objet d'image présent jusqu'alors qu'avec au moins un objet "d'image voisin, des distributions de caractéristiques des objets d'image participants sont calculées et à partir de là l'appartenance.de l'objet d'image de bord considéré est déterminée, auquel cas l'objet d'image de bord est associé à l'objet d'image, dans lequel une valeur de caractéristique apparaît la plus fréquemment, ou bien des probabilités, au moyen desquelles l'objet d'image de bord est associé d'une manière probabiliste à l'un des objets d'image participants, sont calculées à partir de la fréquence d'apparition dans les objets d'image participants.

15. Procédé selon la revendication 14, **caractérisé en ce que** pour les distributions de caractéristiques on utilise des histogrammes respectifs des caractéristiques des objets d'image participants.

16. Procédé selon l'une des revendications 11 à 15, **caractérisé en ce que**, lorsque dans le cas de la correction de bord, un objet d'image du plan d'objets d'image hiérarchique immédiatement inférieur est transféré d'un objet d'image dans un autre objet d'image, la dépendance d'un objet d'image est contrôlé et, en cas de non dépendance, un objet d'image est divisé en les objets d'image correspondant, connexes, qui sont apparus au moyen de la séparation.

17. Procédé selon l'une des revendications 13 à 15, **caractérisé en ce que** l'image numérique devant être segmentée est constituée par plusieurs canaux ayant des contenus en informations différents, et que les objets d'image de bord sont simplement retirés d'un objet d'image et sont associés à l'objet d'image et sont associés à l'objet d'image voisin uniquement lorsqu'une association, déterminée dans tous les canaux, à l'objet d'image voisin est supérieure à une association, dont la moyenne est formée sur tous les canaux, à l'objet d'image présent jusqu'alors.

18. Procédé selon l'une des revendications 1 à 17, **caractérisé en ce qu'**une réunion est exécutée uniquement lorsqu'une différence de caractéristique définie dans le critère d'homogénéité, pour l'un des objets d'image individuels voisins est plus faible par rapport aux autres objets d'image qui en sont voisins est minimale et se situe dans la tolérance prédéterminée, ce qui a pour effet que le critère d'homogénéité est le mieux satisfait.

19. Procédé selon l'une des revendications 1 à 17 **caractérisé en ce** la réunion est exécutée uniquemen lorsque pour les objets d'image individuels voisins, un différence de caractéristique définie dans le critère d'homogénéité par rapport à d'autres objets d'image voisin est minimale et se situe en-deçà de la toléranc prédéterminée, ce qui a pour effet que le critèr d'homogénéité est réciproquement satisfait au mieux.

20. Procédé selon l'une des revendications 1 à 17, **caractérisé en ce qu'**une réunion est exécutée uniquement lorsqu'une différence de caractéristique, définie dans le critère d'homogénéité, par rapport à toutes les autres réunions possibles d'objets d'image dans le même plan d'objets d'image dans l'ensemble de zone d'image segmenté est minimale et se situe à l'intérieur de la tolérance prédéterminée, ce qui a pour effet que le critère d'homogénéité est globalement satisfait au mieux.

21. Procédé selon l'une des revendications 11 à 17, **caractérisé en ce que** dans le cas de la réunion ou de la correction de bord, on utilise en fonction de critères caractéristiques déterminés des objets d'image individuels voisins, comme par exemple la compacité, la taille, la rugosité de bord, la configuration de ligne et le gradient de l'allure de couleur ou leur classification, on utilise différents critères d'homogénéité rapportés à l'objet.

22. Procédé selon les des revendication 3 à 21, **caractérisé en ce qu'**on utilise de la même manière une fusion de deux objets d'image dans le même plan hiérarchique d'objets d'image, un rattachement d'un objet d'image voisin du plan hiérarchique immédiatement inférieur d'objets d'image, un retrait d'un objet d'image du plan d'objets hiérarchique immédiatement inférieur d'objets d'image et/ou un échange d'un objet d'image de rang inférieur situé sur le bord d'un objet d'image, dans tous les plans hiérarchiques de la structure des objets d'image.

23. Procédé selon l'une des revendications 3 à 22, **caractérisé en ce que** l'image numérique devant être segmentée est constituée de plusieurs canaux ayant des contenus en informations différents et que l'on peut additionner les écarts-types, les variances ou les valeurs moyennes de valeurs de couleur des objets d'image contenus dans un objet d'image respectif, d'un plan inférieur déterminé d'objets d'image, pour tous les canaux ou en former la moyenne, les canaux pouvant être pondérés différemment.

24. Procédé selon l'une des revendications précédentes, **caractérisé en ce qu'**on exécute en même temps que la segmentation également une segmentation de lignes, et qu'on introduit une caractéristique de forme, à savoir la configuration de ligne, qui indique par exemple le rapport de la longueur à la largeur d'un objet d'image, et on segmente tout d'abord une image, et ensuite on traite chaque objet d'image, qui dépasse une configuration de ligne déterminée, également en tant qu'objet de ligne.

25. Procédé selon la revendication 24, **caractérisé en ce que** le traitement d'un objet d'image en tant qu'objet de ligne élargit un voisinage par le fait que dans le cas d'un tel objet d'image, en direction des extrémités libres de l'objet au-delà du voisinage direct jusqu'à une distance déterminée et dans un secteur angulaire déterminé, on effectue une recherche d'objets d'images ajustés adaptés qui complètent la ligne,

en fonction de la qualité avec laquelle la ligne de l'objet de ligne présent jusqu'alors est complété, le traitement détermine un facteur qui améliore une valeur d'ajustement déterminée dans le critère d'homogénéité de sorte que pour la même valeur d'ajustement, on préfère une réunion à configuration de ligne à la réunion usuelle,

le traitement détermine des critères concernant la qualité avec laquelle une ligne est complétée, comme par exemple une amélioration de la configuration de ligne de l'objet de ligne présent jusqu'alors, en plus du même contraste de couleur par rapport à l'environnement et/ou de la même couleur et/ou lorsqu'un objet d'image ajusté n'est pas trouvé dans un voisinage immédiat, le traitement établit une liaison aussi ténue que possible entre les objets d'image non voisins de sorte que l'objet de ligne est, dans tous *les* cas, continu en diagonale.

26. Procédé selon la revendication 24 ou 25, **caractérisé en ce que** dans le cas de l'exécution supplémentaire d'une segmentation basée sur des lignes, on réalise au départ une segmentation avec un voisin en diagonale, auquel cas de petits objets d'image et des objets en forme de lignes sont continus en diagonale et tous les autres objets d'image sont continus dans un plan, auquel, lorsqu'un objet d'image continu en diagonale, qui était jusqu'alors un petit objet, dépasse la taille critique ou lorsqu'un objet d'image jusqu'alors en forme de ligne tombe, sous l'effet d'une fusion de surface, au-dessous d'une configuration de ligne critique, il est divisé en ses objets d'image de rang inférieur qui sont contigus dans le plan.

27. Procédé selon l'une des revendications précédentes, **caractérisé en ce que** les objets d'image sont traités selon une séquence stochastique ou pseudo-stochastique.

28. Procédé selon l'une des revendications précédentes, **caractérisé en ce que** l'itération est répétée jusqu'à ce qu'on obtienne une formation stable ou approximativement stable de segments.

29. Procédé selon l'une des revendications précédentes, **caractérisé en ce**

**qu'**on établit une structure hiérarchique d'objets et qu'on fait démarrer une séquence hiérarchique de traitement tout d'abord dans un plan d'objets d'image le plus bas possible et qu'ensuite on traite pas-à-pas des plans supérieurs d'objets d'image,

**qu'**on commence la séquence hiérarchique de traitement tout d'abord au niveau du plan d'objets d'image le plus élevé possible et qu'ensuite on traite pas-à-pas des plans inférieurs d'objets d'image ou

**que** la séquence hiérarchique de traitement est quelconque et qu'on introduit un nouveau plan hiérarchique d'objets d'image ou des objets individuels d'image d'une manière similaire également entre deux autres plans d'objets d'image, et

dans les deux derniers cas, une réunion d'objets d'image voisins est possible uniquement lorsqu'ils possèdent le même objet d'image en tant qu'objet d'image de rang supérieur.

30. Procédé selon l'une des revendications précédentes, **caractérisé en ce que** l'image numérique à segmenter est constituée de plusieurs canaux ayant des contenus différents en information, et que des objets d'image sont réunis uniquement lorsque le critère utilisé d'homogénéité est satisfait respectivement pour chacun des canaux.

31. Procédé selon l'une des revendications précédentes, **caractérisé en ce que** pour une détermination de caractéristiques d'objets d'image, on n'utilise aucun élément d'image de bord dans le cas d'objets d'image suffisamment étendus.

Grauwerte

256

Fig.1

Fig.2

Segmentierte Objekte

Bildpunkt auf dem Rand

Fig.3